# EUROPÄISCHE PATENTSCHRIFT

(11) **EP 3 697 599 B1**
(45) Veröffentlichungstag und Bekanntmachung des Hinweises auf die Patenterteilung: **21.02.2024**
(21) Anmeldenummer: 18807612.9
(22) Anmeldetag: 21.11.2018
(51) Int. Cl.: B29C 65/20, E06B 3/96, B29C 65/78, B29K 101/12, B29K 27/06

(54) **VORRICHTUNG UND VERFAHREN ZUM VERBINDEN VON PROFILTEILEN**
DEVICE AND METHOD FOR CONNECTING PROFILED PARTS
DISPOSITIF ET PROCÉDÉ POUR RELIER DES PIÈCES PROFILÉES

(30) Priorität: 21.11.2017 DE 102017127483
(43) Veröffentlichungstag der Anmeldung: 26.08.2020
(73) Patentinhaber: Rotox Besitz- und Verwaltungsgesellschaft mbH, 65611 Brechen (DE)
(72) Erfinder:
(74) Vertreter: Müller, Eckhard
(86) Internationale Anmeldenummer: PCT/EP2018/082060
(87) Internationale Veröffentlichungsnummer: WO 2019/101787

(56) Entgegenhaltungen:
- EP-A1- 3 409 449
- WO-A1-2016/177715
- WO-A1-2017/157914
- DE-A1-102015 013 439
- DE-A1-102016 104 785
- US-A- 4 239 574
- US-A1- 2004 055 434
- US-A1- 2006 065 358

## Beschreibung

Die Erfindung betrifft ein Verfahren und eine Vorrichtung zum Verbinden von Profilteilen.

Derartige Verfahren und Vorrichtungen sind beispielsweise aus der DE 10 2015 107 121 A1 bekannt und werden insbesondere zum Verschweißen von PVC-Profilstäben zu Werkstücken in Form von Fenster- oder Türrahmen oder -flügeln verwendet. Hierzu werden die Profilstäbe vor dem Verschweißen auf jeweils erforderliche Längen abgelängt, um die Profilteile anschließend an den die Fügeflächen bildenden Schnittflächen durch Verschweißen miteinander zu verbinden. Die Profilteile können erforderlichenfalls auf Gehrung geschnitten werden, so dass die Gehrungsschnittflächen die Fügeflächen bilden.

Das eigentliche Verschweißen der Profilteile im Sinne der vorliegenden Erfindung erfolgt durch Anschmelzen und anschließendes Fügen der Fügeflächen an den Profilstabenden. Hierzu werden die zu verschweißenden Profilteile zunächst in eine entsprechende Spannvorrichtung eingelegt und mit Hilfe von Anschlägen und Führungen in der Vorrichtung zueinander positioniert. Daraufhin werden die Fügeflächen in einem Anschmelzschritt gegen die Heizfläche eines Heizelementes der Schweißvorrichtung gedrückt. Bei dem dabei stattfindenden Anwärm- und Angleichschritt wird Material des jeweiligen Profilteils an dessen Fügefläche geschmolzen, so dass die für die Schweißverbindung erforderliche Schmelze, also durch Wärmeeinwirkung flüssig oder teigig gewordenes Material, entsteht. Durch das Andrücken der Fügefläche an das Heizelement, das sog. Angleichen, werden ggf. auf den Fügeflächen vorhandene Unebenheiten mit abgeschmolzen.

Beim anschließenden Umstellen wird das Heizelement zwischen den Profilteilen entfernt, bevor diese gefügt werden. Das Fügen erfolgt durch in Kontakt bringen und Stauchen beider Profiteile, wobei die angeschmolzenen Fügeflächen in Fügerichtung aufeinander zubewegt und gegeneinander gepresst werden. Der noch heiße, vorzugsweise thermoplastische Werkstoff der beiden Profilteile, die Schmelze, kommt dabei in Kontakt und bildet nach dem Erkalten eine stabile Schweißverbindung. Ein solcher Verfahrensablauf ist beispielsweise in der DE 10 2012 112 533 A1 beschrieben.

Die Fügepartner selbst sind um ein Übermaß länger als das spätere Fertigmaß der verbundenen Elemente des Werkstückes. Zur Bildung der Schmelze wird ein Teil dieses Übermaßes, der sogenannte Abbrand, an dem Heizelement abgeschmolzen. Ein anderer Teil des Übermaßes erweicht während des Anschmelzschrittes und wird in dem anschließenden Fügeschritt auf das vorgesehene Endmaß gestaucht. Das Verhältnis des Übermaßes hinsichtlich des Abschmelzens und Stauchens ist variabel. Der Abbrand kann je nach verwendeter Profilart größer oder kleiner gewählt werden, um stets ausreichend Schmelze für eine zuverlässige Schweißverbindung zur Verfügung zu stellen.

Während des Anschmelzschrittes an dem Heizelement beginnt das Material des Profilteils an der Fügefläche, beispielsweise PVC, zu fließen und sich zu verformen. Hierbei bewegt sich die Schmelze, die durch das Andrücken des Profilteils an den Heizspiegel verdrängt wird, auch seitlich nach außen über den Rand der Fügefläche bis auf die Außenflächen, insbesondere auf die Sichtflächen des Profilteils hinaus.

Die Sichtflächen des Profilteils sind diejenigen äußeren Flächen, die im fertigen und eingebauten Zustand des Werkstückes sichtbar sind. Bei Fenstern oder Türen sind dies die in der Fenster- oder Türebene sichtbaren Flächen der einzelnen Profilteile. An den sich in der Regel quer oder senkrecht zu den Sichtflächen erstreckenden Funktionsflächen der Profilteile können Befestigungselemente, bspw. Beschläge, oder andere Werkstückelemente, bspw. Fensterscheiben, angeordnet und befestigt werden.

Bei bekannten Verbindungsverfahren erkaltet während des Fügens der als überschüssige Schmelze nach außen tretende Werkstoff der Profilteile und bildet an der Verbindungsstelle der Profilteile eine Schweißraupe aus. Eine solche Schweißraupe auf Außenflächen des Profilteils, insbesondere auf den Sichtflächen steht jedoch der Maßhaltigkeit des Werkstückes sowie einem hochwertigen Qualitätseindruck entgegen. Daher wird die Schweißraupe nach einer gewissen Abkühlzeit in Nachfolgemaschinen, beispielsweise Verputzmaschinen entfernt, bspw. durch Fräsen von Schattennuten oder durch bündiges Abstechen entlang der Verschweißung.

Mittlerweile werden auch folierte bzw. laminierte Profile zur Herstellung von Fenster-und Türrahmen bzw. -flügeln verwendet, um diese auf einfache Weise mit unterschiedliche Farben oder Dekoren auszustatten. Bei derartigen Profilen gestaltet sich die notwendige Nachbearbeitung von Schweißraupen im Fügebereich schwierig, da die dünnen Folien bzw. Laminatschichten durch eine mechanische Bearbeitung leicht beschädigt werden können. Insbesondere bei automatisierten oder teilautomatisierten Abläufen kann so ein erhöhter, kostentreibender Ausschuss entstehen. Durch das Entfernen der Schweißraupe wird der darunterliegende, von der Folie oder der Laminierung farblich abweichende Grundwerkstoff des Profilteils sichtbar, der von Hand in einer entsprechenden Farbe kaschiert werden muss.

Seit einigen Jahren wird die fertigungstechnische Idealvorstellung verfolgt, eine Verschweißung von Profilteilen, insbesondere von solchen mit einem Dekor zu erreichen, die in optisch ansprechenden Sichtflächen resultiert, wobei keine Schweißnaht entstehen soll, die entgratet und/oder nachgefärbt werden muss.

Lösungsansätze des jüngeren Stands der Technik beabsichtigen, die Entstehung einer Schweißraupe von vornherein verhindern, indem das Fließen der Schmelze vor und/oder während des Fügens gezielt beeinflusst wird. Bspw. kann das jeweilige Profilbauteil dazu mit Begrenzungselementen, wie zum Beispiel Begrenzungsmessern, eingeengt werden, um das Austreten von Schmelze zu verringern oder zu verhindern. Dies ist beispielsweise in den Druckschriften DE 20 2015 000 908 U1, DE 10 2015 107 121 A1, DE 10 2016 102 240 A1 und DE 10 2016 104 785 A1 vorgeschlagen. Zum Teil weisen diese Vorrichtungen Formteile auf, die vor und/oder während des Anschmelzschrittes zur Beeinflussung der Schmelze bewegt werden können. Dabei soll entweder verhindert werden, dass Schmelze nach Außen tritt und/oder bereits nach außen getretene Schmelze zurück zur bzw. auf die Fügefläche des jeweiligen Profilteils bewegt werden, so dass beim anschließenden Fügen eine Schweißraupe erst gar nicht entsteht.

Ein hierbei neu auftretendes Problem sind Verunreinigungen der Schmelze mit aufgeschmolzenem Material der Schutzfolien. Diese befinden sich auf den Sichtflächen der Profilteile und dienen dem Schutz vor Transportschäden sowie der Einwirkung von Baustoffen und werden vor dem Anschmelzschritt in einem zusätzlichen Arbeitsschritt lokal entfernt.

Trotz dieser zusätzlichen Maßnahmen verbleibt dennoch oftmals ein Spalt zwischen dem jeweiligen Begrenzungselement und dem Profilteil, durch den Schmelze fließen kann, so dass das Auftreten einer Schweißraupe nicht immer zuverlässig zu unterdrücken ist. Nach dem Abkühlen müssen auftretende Schweißraupen daher weiterhin in einem zusätzlichen Arbeitsschritt entfernt werden. Der Fertigungsaufwand und die Fertigungskosten lassen sich somit nicht in dem gewünschten Maße reduzieren.

In der EP 2 255 942 A1 wird vorgeschlagen, die Begrenzungselemente gleichzeitig als bewegliche Schneidklingen auszubilden. Während des Fügeschrittes, in dem die Profilteile mit ihren angeschmolzenen Fügeflächen bereits gegeneinander gepresst und dabei gestaucht werden, vollziehen diese Schneidklingen zunächst abwechselnd eine Hin- und Herbewegung, um die noch nicht vollständig abgekühlte und noch nicht verfestigte Schweißraupe an ihrer Wurzel zum Profilteil zu verjüngen. Nach vollständigem Abkühlen und dem Verfestigen der Schweißraupe erfolgt eine weitere Relativbewegung der Schneidklingen, um die Schweißraupe vollständig zu entfernen. Dieses Verfahren verlagert jedoch das Entfernen der Schweißraupe in die Schweißmaschine und konnte sich technisch nicht durchsetzen.

Die WO 2013/132406 A1 und die WO 2014/122572 A1 schlagen zur Vermeidung einer Schweißraupe alternativ vor, Profilmaterial am Rand der Fügefläche vor dem Anschmelzen zu entfernen, um die zur Erzeugung der Schmelze zur Verfügung stehende Materialmenge von vornherein zu reduzieren. Hierdurch soll bereits die Schmelze nicht mehr auf die Außenflächen der Profilteile austreten. Dabei kann es aber zu Festigkeitsverlusten an der Verbindung kommen, da das Profilteil an seiner Fügefläche nicht vollständig angeschmolzen und wegen der dadurch gegebenen kleineren effektiven Querschnittfläche nicht vollflächig verschweißt wird.

Die US 4 239 574 A betrifft ein Verfahren und eine Vorrichtung zur Herstellung von Kunstharzstrukturen, z. B. Profilelementen, die an ihren Endflächen zusammengeschweißt sind, wobei die Strukturen festgeklemmt sind und die Endflächen durch Kontakt mit einer Heizplatte erwärmt werden, bis das Harz zu schmelzen beginnt. Dann werden die so erweichten Endflächen zusammengedrückt und die resultierende Schweißraupe wird nachbearbeitet.

Aus der US 2004/055434 A1 und der US 2006/065358 A1 sind ein Verfahren und eine Vorrichtung zum Durchführen eines Bearbeitungsvorgangs zum Entfernen von Schweißraupen bekannt, der an der Schweißstation und unmittelbar nach den Schweißvorgängen stattfindet.

Ein Verfahren und Vorrichtung zum Verschweißen von zwei hohlen Profilstäben aus Kunststoff zur Bildung eines Fensterrahmens der eingangs genannten Art gehen aus der EP 3 409 449 A1 und der DE 10 2017 111 606 A1 hervor. Dabei werden die miteinander zu verbindenden Profilstäbe durch Einfügen eines Schweißspiegels zwischen deren Verbindungsflächen und Anpressen derselben an den Schweißspiegel unter Bildung von äußeren und inneren Wulsten auf eine vorgegebene Temperatur erhitzt und nach dem Entfernen des Schweißspiegels bei gleichzeitiger Vergrößerung des Schweißwulstes unter Druck zusammengefügt. Nach dem Entfernen des Schweißspiegels werden nur die an den Sichtflächen des späteren Fensterrahmens im Bereich der Verbindungsstellen der beiden Profilstäbe entstandenen äußeren Wülste unter Bildung einer schrägen Kante geringfügig nach innen gedrückt und dann zusammen mit den inneren Wülsten entfernt.

Vor diesem Hintergrund liegt der Erfindung die Aufgabe zugrunde, ein Verfahren und eine Vorrichtung anzugeben, mittels welcher das Auftreten bzw. die Ausprägung einer Schweißraupe zuverlässig vermieden bzw. herabgesetzt werden kann. Diese Aufgabe wird gelöst mit einem Verfahren nach Anspruch 1 sowie einer Vorrichtung nach Anspruch 14.

Danach ist erfindungsgemäße ein Verfahren zum Verbinden von wenigstens zwei Profilteilen vorgesehen, insbesondere zum Herstellen von aus einem thermoplastischen Kunststoff bestehenden Tür- oder Fensterrahmen bzw. -flügeln, wobei die wenigstens zwei an relativ zueinander verfahrbaren Profilauflagen festgelegten Profilteile in einem Anschmelzschritt mittels eines Heizelementes jeweils an einer endseitigen Fügefläche angeschmolzen werden. Nach Entfernung des Heizelementes werden die Profilteile in einem Fügeschritt mit den angeschmolzenen Fügeflächen so lange gegeneinander gepresst, bis die dort miteinander in Kontakt gebrachte Schmelze unter Ausbildung einer Schweißverbindung abkühlt und sich verfestigt. Dabei liegt an wenigstens einer Außenfläche wenigstens eines Profilteils ein Begrenzungselement mit einer Trennkante auf und/oder an. Während des Anschmelzschrittes kontrolliert und/oder begrenzt das Begrenzungselement den Austritt eines Schmelzüberschusses am Übergang der jeweiligen Fügefläche zur Außenfläche, insbesondere Sichtfläche des Profilteils. Erfindungsgemäß ist vorgesehen, dass vor dem Fügeschritt in einem Vereinzelungsschritt ein Gegenwerkzeug entlang der Trennkante des Begrenzungselementes durch die Schmelze geführt wird, um den über die Trennkante ausgetretenen Schmelzüberschuss zu vereinzeln.

Unter dem Anschmelzschritt ist das Andrücken der Profilteile an das Heizelement, bspw. einem Heizspiegel, gemeint, wobei der an der Fügefläche befindliche Werkstoff des Profilteils durch das Anwärmen an- bzw. abgeschmolzen wird.

Das Profilteil wird dabei um den sogenannten Abbrand, also um das flüssig bzw. teigig werdende und unter dem Einfluss der Andruckkraft seitlich ausweichende Material des Profilteils kürzer. Da die Fügefläche des Profilteils gegen das meist ebene Heizelement gedrückt wird, werden eventuell an der Fügefläche des Profilteils befindliche Unebenheiten an- oder sogar ausgeglichen. Die seitlich ausweichende Schmelze tritt in den Bereichen, in welchen ein Begrenzungselement an der Außenfläche des Profilteils an und/oder aufliegt, über die Trennkante hinaus und kühlt dort schneller ab als an der Fügefläche. Dieser zur Herstellung der Schweißverbindung nicht erforderliche Anteil der Schmelze wird als Schmelzüberschuss bezeichnet.

Die Außenfläche kann vorzugsweise wenigstens eine Sichtfläche und/oder Funktionsfläche des Profilteils sein.

Der insbesondere an den Sichtflächen austretende Schmelzüberschuss kann bei farbig folierten oder laminierten Profilteilen neben dem Grundwerkstoff des Profilteils auch Anteile aus der aufgeschmolzenen Dekorfolie oder Dekorschicht enthalten. Diese kann unterschiedliche Materialien enthalten, die in ihren Eigenschaften von dem Grundwerkstoff des Profilteils abweichen können. Der Grundwerkstoff des Profilteils besteht in der Regel aus einem thermoplastischen Kunststoff, wie bspw. PVC, derjenige der Dekorfolie oder Dekorschicht z.T. aus anderen Kunststoffen. Eine Dekorfolie kann beispielsweise aus einer pigmentierten und/oder mit Druckfarbe beschichteten PVC-Halbhartfolie bestehen, die zum Schutz vor Witterung mit einer transparenten Acrylatfolie laminiert sein kann..

Außerdem können in dem Schmelzüberschuss Anteile aus aufgeschmolzener Schutzfolie enthalten sein. Die Schutzfolie kann aus einem anderen Material, wie beispielsweise LDPE, bestehen und ist mittels eines Klebers auf den Profilteilen lösbar befestigt. Die Profilteile sind an den Sichtflächen in der Regel zum größten Teil mit Schutzfolien belegt, um Beschädigungen der Profilteile sowie der daraus hergestellten Werkstücke bei Transport und Einbau zu vermeiden. Die Schutzfolie reicht in der Regel in den Bereich des Schmelzüberschusses hinein, sofern sie nicht in einem vorherigen Arbeitsschritt entfernt wurde.

Sobald der Anschmelzschritt abgeschlossen ist, werden die auf den Profilauflagen festgespannten Profilteile auseinandergefahren, so dass das Heizelement aus dem Bereich zwischen den Fügeflächen der Profilteile entfernt werden kann. Die jeweils an dem oder den Profilteilen anliegenden Begrenzungselemente bewegen sich dabei zusammen mit den Profilauflagen vor und zurück.

In der auseinandergefahrenen Stellung der späteren Fügepartner wird erfindungsgemäß und anders als bei den bekannten, eine Schweißraupe vermeidenden Verfahren der Schmelzüberschuss nicht zurück auf die Fügefläche befördert, sondern mittels des Gegenwerkzeugs vereinzelt. Unter Vereinzeln ist zu verstehen, dass die über die Trennkante nach außen getretene Schmelzemasse von der an der Fügefläche befindlichen Schmelze abgeteilt und die dabei entstehende, separate Werkstoffmasse von dem jeweiligen Profilteil abtrennt wird. Aufgrund der Vereinzelung kühlt die abgeteilte Schmelze so stark ab, dass sie als bereits verfestigtes Stück Profilwerkstoff abfällt.

Ein Vorteil der Erfindung liegt insbesondere darin, dass die in dem Schmelzüberschuss enthaltenen Verunreinigungen durch Dekor- und Schutzfolienanteile sowie durch die bereits stärker abgekühlten und nur noch als teigige Masse vorliegenden Schmelzeanteile nicht mehr mit der zum eigentlichen Fügen erforderlichen Schmelze vermischt werden. Die Schweißverbindung erhält so eine hohe Güte. Untersuchungen haben gezeigt, dass sich auf diese Weise die Festigkeitswerte von Eckverbindungen stark gegenüber den bekannten Eckverbindungen erhöhen lässt, bei denen eine Schweißraupe ebenfalls vermieden werden soll. Aufwändige Nachbearbeitungen gerade an den Sichtflächen der Profilteile können damit auf ein Minimum reduziert oder sogar vollständig vermieden werden. Dies sogar dann, wenn auf das vorherige lokale Entfernen der Schutzfolie verzichtet wird.

Erfindungsgemäß vollzieht das Gegenwerkzeug während des Vereinzelungsschrittes eine Abrollbewegung. Auf diese Weise wirken keine oder nur geringe Schubkräfte auf die durch das Gegenwerkzeug bearbeitete Schmelze. Die die auf der Fügefläche des Profilteils befindliche Schmelze wird somit nicht oder nur kaum verschoben, was die Qualität und Festigkeit der daraus hergestellten Fügeverbindung verbessert. Außerdem kann die Gleitreibung zwischen dem Profilteil bzw. der Trennkante und dem Gegenwerkzeug reduziert werden, wodurch sich der Verschleiß an den in Wirkstellung miteinander in Kontakt tretenden Werkzeugen verringert.

Als vorteilhafte Ausgestaltung der Erfindung hat sich ebenfalls erwiesen, das Gegenwerkzeug während der Vereinzelung des Schmelzüberschusses zumindest abschnittsweise mit der Trennkante in Kontakt gebracht wird. Auf diese Weise ist eine besonders zuverlässige Vereinzelung des Schmelzüberschusses von der an der Fügefläche verbleibenden Schmelze möglich. Dort, wo die Trennkante und das Gegenwerkzeug in direkten Kontakt miteinander kommen, findet bereits eine Abtrennung des Schmelzüberschusses statt. Der Schmelzüberschuss wird sozusagen abgeschnitten. Vergleichbar ist dieses Werkzeugprinzip mit dem Keilschneiden bzw. "Messerschneiden" oder aber mit dem Scherschneiden gemäß DIN 8588. Das Begrenzungselement ist dabei das feststehende Werkzeug mit einer als Schneide wirkenden Trennkante und das bewegliche Gegenwerkzeug den stumpf ausgebildeten Amboss oder Gegenschneide.

In Weiterbildung der Erfindung kann ferner vorgesehen sein, dass das Gegenwerkzeug an die Trennkante, insbesondere federbelastet oder mittels eines eigenen Antriebes, angelegt wird.

Von besonderem Vorteil kann es sein, wenn das Gegenwerkzeug und das Begrenzungselement beim Vereinzeln über die wirksame Trennkante mechanischen Kontakt miteinander haben. Auf diese Weise kann ein besonders "sauberer Schnitt" ermöglicht werden, der den Schmelzüberschuss und ggf. eine Schutzfolie vom Profilteil vereinzelt.

Mittels einer Federbelastung kann die Führung des Gegenwerkzeugs mit einer gewissen Toleranz versehen werden, die durch die Federkraft sowie den Federweg ausgeglichen wird. Auch Toleranzen an der Kante des Profilteils können auf diese Weise ausgeglichen werden.

Bei dem erfindungsgemäßen Verfahren kann außerdem vorgesehen sein, dass das Begrenzungselement in der Ebene der Außenfläche des Profilteils, auf der es aufliegt, relativ zur Fügefläche in zumindest zwei Positionen verfahren wird, insbesondere in eine vorverlagerte Position während des Vereinzelungsschrittes und in eine zurückgezogene Position während des Fügeschrittes oder umgekehrt. Entsprechend kann die erfindungsgemäße Vorrichtung mit einer entsprechenden Führung versehen sein, die eine derartige Bewegung des Begrenzungselementes ermöglicht.

In der vorverlagerten Position des Begrenzungselementes kann dessen Trennkante an oder kurz hinter dem Bereich angeordnet werden, bis zu welchem das Profilteil abgeschmolzen wird. Dieser Bereich bzw. Punkt wird auch als Schmelzendpunkt bezeichnet. Da an dieser Stelle während des Fügeschrittes auch der Stauchvorgang beginnt, wird derselbe Bereich auch als Stauchweganfang bezeichnet. Dem gegenüber in Füge- bzw. Stauchrichtung zurückversetzt, liegt der sogenannte Fügeendpunkt bzw. das Stauchwegende. Während des Stauchens wird das jeweilige Profilteil bis zum Fügeendpunkt verkürzt. Die vorverlagerte Position des Begrenzungselementes kann also zwischen dem Fügeendpunkt und dem Schmelzendpunkt liegen. Die zurückgezogene Position, die als "Stauchposition" während des Fügens eingenommen wird, kann hinter dem Fügeendpunkt liegen, um eine Kollision der sich gegenüberliegenden Begrenzungselemente der beiden Profilteile zu vermeiden.

Als vorteilhaft hat sich außerdem herausgestellt, das Gegenwerkzeug mit einem vorgegebenen Werkzeugabstand, vorzugsweise kleiner als 0,5 mm, insbesondere im Bereich kleiner 0,2 mm und größer als 0 mm, besonders bevorzugt bei 0,1 mm, zur Trennkante zu führen. Hierdurch wird ein direkter Kontakt zwischen dem Gegenwerkzeug und der Trennkante des Begrenzungselements vermieden, so dass ein bei direktem Kontakt drohender Verschleiß an der Trennkante des Begrenzungselementes bzw. an dem Gegenwerkzeug vermieden wird. Es hat sich außerdem gezeigt, dass bei Einhaltung des vorgegebenen Werkzeugabstandes eine zuverlässige Vereinzelung erzielt werden kann.

Erfindungsgemäß kann das Gegenwerkzeug auch messerartig ausgebildet sein und eine Schubbewegung ausführen, die sich aus einem längs der Trennkante verlaufenden Bewegungsanteil und einem quer dazu verlaufenden Bewegungsanteil zusammensetzt. Im Ergebnis ergibt sich so eine gegenüber der Trennkante schräg verlaufende Bewegung des Gegenwerkzeugs. Bei dieser Alternative zu einem eine reine Abrollbewegung ausführenden Gegenwerkzeug wird das messerähnliche Gegenwerkzeug an der Trennkante in Richtung der Trennkante sowie gleichzeitig quer dazu bewegt und schiebt den zu vereinzelnen Schmelzüberschuss von der Fügefläche weg.

Bevorzugt kann das messerähnliche Gegenwerkzeug schräg zur Fügefläche bzw. zu der von der Fügefläche definierten Fügeebene angeordnet sein. Durch die Querbewegung und die Schrägstellung des Gegenwerkzeugs kann der Schmelzüberschuss besser von dem Profilteil weggeführt und sauber vereinzelt.

Nach einer anderen Ausführungsform ist es möglich, dass das Gegenwerkzeug eine kombinierte Schub- und Abrollbewegung ausführt.

In Weiterbildung der Erfindung kann die die Fügefläche nach außen begrenzende Profilkante des jeweiligen Profilteils in dem durch das Gegenwerkzeug bearbeiteten Bereich durch das Gegenwerkzeug selbst oder durch ein separat bewegbares Nachbearbeitungswerkzeug zumindest abschnittsweise nach innen in Richtung zur Fügefläche verformt werden. Der Profilkante, also der Rand der Fügefläche, soll hierdurch eine "Ausrichtung" aufgeprägt werden, in welche sie beim anschließenden Fügeschritt und dem dabei vorgenommenen Stauchen verdrängt wird. Die Profilkante bewegt sich während des Stauchens nach innen zur Fügefläche hin, so dass quasi automatisch eine sogenannten "Schattennut" bzw. V-Nut an der Verbindungsstelle entsteht und gleichzeitig einem sichtbaren Austritt von Grundmaterial, das unter der Farbschicht an der Profiloberfläche liegen kann, entgegenwirkt wird. Eventuell bestehende Höhenunterschiede zwischen den aneinandergefügten Profilteilen können auf diese Weise kaschiert bzw. optisch ausgeglichen werden.

In einer vorteilhaften Ausgestaltung kann auf die Vereinzelung des Schmelzüberschusses ein Nachbearbeitungsschritt mit einem Nachbearbeitungswerkzeug erfolgen, in welchem die Verformung der Profilkante stattfindet. Mittels eines separaten Nachbearbeitungswerkzeugs und eines zum Vereinzelungsschritt separaten Schritt lässt sich die Art und Ausprägung der Nachbearbeitung bedarfsgerecht anpassen.

Alternativ kann es von Vorteil sein, die Profilkante bereits zusammen mit der Bewegung des Gegenwerkzeugs entlang der Trennkante zu verformen. Dies kann beispielsweise unter Verwendung eines konturierten Gegenwerkzeuges, bspw. einer Rolle, geschehen und bietet Vorteile im Hinblick auf reduzierte Taktzeiten des Fertigungsprozesses.

Denkbar ist auch, dass das Nachbearbeitungswerkzeug gleichzeitig beide Profilteile bearbeitet.

Grundsätzlich kann eine Bearbeitung durch das Nachbearbeitungswerkzeug derart erfolgen, dass sowohl die jeweilige Profilkante der Profilteile mittels des Nachbearbeitungswerkzeuges vor dem Fügeschritt verformt als auch während oder nach Beendigung des Fügeschrittes der sich durch die Schweißnaht ergebenden Fügelinie eine Form aufgeprägt wird. Hierbei kann das Nachbearbeitungswerkzeug zur Verformung der Profilkanten auf die Enden der Profilteile zu gefahren werden, um die Profilkanten zu verformen. Anschließend kann das Nachbearbeitungswerkzeug in dieser Stellung belassen werden, während die Profilenden im Fügeschritt aufeinander zu bewegt und dabei zur Bildung der Schweißverbindung gestaucht werden. Die auf die sich dabei ergebende Fügelinie aufgeprägte Form ergibt sich aus der Form der Bearbeitungsflächen des Nachbearbeitungswerkzeuges, die beim Stauchen mit dem Profilteilen in Verbindung stehen.

Gemäß einer möglichen Ausgestaltung der Erfindung kann die Bearbeitung durch das Nachbearbeitungswerkzeug aber auch zweistufig erfolgen. Insbesondere kann es vorgesehen sein, dass die Nachbearbeitung in der Weise erfolgt, dass die jeweilige Profikante der Profilteile in einer ersten Bearbeitungsstufe vor dem Fügeschritt mittels des Nachbearbeitungswerkzeugs verformt wird. In einer zweiten Bearbeitungsstufe, die während oder nach Beendigung des Fügeschritts, also des Stauchens erfolgt, kann der sich durch die Schweißnaht ergebenden Fügelinie mittels des Nachbearbeitungswerkzeugs eine Form aufgeprägt werden. Hierzu kann das Nachbearbeitungswerkzeug zurückgezogen und nochmals auf die Fügestelle zu bewegt werden. Zum Beispiel kann hier eine V-förmige Nut aufgeprägt werden.

Das Nachbearbeitungswerkzeug kann dazu verwendet werden, während des Fügeschritts ein Fließen von Schmelzgut in Richtung der Sichtfläche zu begrenzen. Dies kann beispielsweise dazu genutzt werden, der sich durch die Schweißnaht ergebenden Fügelinie eine bestimmte Gestalt aufzuprägen, bspw. die bereits erwähnte V-förmige Nut.

Die Erfindungsgemäß nach Anspruch 14 vorgeschlagene Vorrichtung zum Verbinden von wenigstens zwei Profilteilen kann insbesondere zur Herstellung von aus thermoplastischem Kunststoff bestehenden Profilteilen zu Tür- oder Fensterrahmen bzw. -flügeln ausgebildet sein. Die Vorrichtung weist wenigstens zwei relativ zueinander verfahrbare Profilauflagen zum Festlegen von wenigstens zwei Profilteilen auf. Außerdem ist ein zwischen die Profilauflagen einführbares Heizelement zum jeweils endseitigen Anschmelzen der wenigstens zwei festgelegten Profilteile an ihren Fügeflächen vorgesehen. Dabei ist wenigstens ein Begrenzungselement zum Auf- oder Anliegen an wenigstens einer Außenfläche wenigstens eines Profilteils, vorzugsweise zum Kontaktieren wenigstens einer Sichtfläche und/oder wenigstens einer Funktionsfläche, vorgesehen. Das Begrenzungselement ist mit einer Trennkante zum Kontrollieren und/oder Begrenzen des Austritts eines Schmelzüberschusses zur Außenfläche des Profilteils am Übergang zur jeweiligen Fügefläche ausgebildet. Die Vorrichtung weist ein Gegenwerkzeug zum Vereinzeln des über die Trennkante ausgetretenen Schmelzüberschusses auf, das entlang der Trennkante und durch die Schmelze verfahrbar ist.

Die erfindungsgemäße Vorrichtung ist zudem in der Weise ausgebildet, dass das Gegenwerkzeug dreh- oder schwenkbar bezüglich der Trennkante geführt ist. Vorzugsweise kann dass das Gegenwerkzeug als Rolle ausgeführt sein. Auf diese Weise kann das Gegenwerkzeug die oben beschriebene Abrollbewegung vollziehen.

Erfindungsgemäß hat es sich als Vorteil erwiesen, wenn die Bearbeitungsfläche, insbesondere die Mantelfläche des Gegenwerkzeuges konturiert ist. Eine Konturierung kann zum Beeinflussen der Schmelze an der Fügefläche vorgesehen werden, um bspw. gleichzeitig mit dem Entlangfahren des Gegenwerkzeugs an der Trennkante des Begrenzungselementes auch eine Verformung der Profilkante durchzuführen.

Eine Verformung der Profilkante kann alternativ auch mittels eines Nachbearbeitungswerkzeugs zum Bearbeiten der Profilkante erreicht werden, wobei das Nachbearbeitungswerkzeug vorzugsweise als Rolle oder als Leiste oder als Wippe ausgebildet sein, wobei die Rolle oder Leiste oder auch die Wippe, vorzugsweise eine Prägekontur, insbesondere eine V-förmige Prägekontur aufweisen kann. Bei der ersten Variante kann die Rolle über die Profilkante nach dem Vereinzeln unmittelbar vor, während oder unmittelbar nach dem Stauchen geführt werden. Bei der zweiten Variante wird die Leiste nach dem Vereinzeln über die Profilkante geführt. Auch dies kann wieder unmittelbar vor, während oder unmittelbar nach dem Fügen bzw. Stauchen durchgeführt werden. Bei der letzten Variante wird nach dem Vereinzeln die Wippe über die Profilkante geführt. Dies kann ebenfalls unmittelbar vor, während oder unmittelbar nach dem Fügen bzw. Stauchen ausgeführt werden. Hierdurch ist auf der Fügeverbindungsstelle eine V-Nut erzeugbar.

Nach einer Weiterbildung der Erfindung sind das Heizelement und/oder das Gegenwerkzeug und/oder ein Nachbearbeitungswerkzeug zum Verformen der Profilkante zumindest teilweise bewegungsgekoppelt. Eine Kopplung der Bewegung der einzelnen Elemente der Vorrichtung kann wiederum zu einer Verkürzung der Taktzeit führen. Zudem ist unter Umständen keine zusätzliche Aktorik zur Erzeugung der Gegenwerkzeugbewegung erforderlich.

Nach einer Weiterbildung der Erfindung kann das Nachbearbeitungswerkzeug zum gleichzeitigen Bearbeiten der beiden miteinander zu fügenden Profilteile ausgebildet sein. Hierdurch ist eine zeitsparende, synchrone Bearbeitung der Profilenden besser möglich. Ferner kann ein das Nachbearbeitungswerkzeug mit nur einem Antrieb bewegt werden.

Vorzugsweise kann das Nachbearbeitungswerkzeug eine mit dem Profilteil in Kontakt bringbare Bearbeitungsfläche aufweisen, die zumindest abschnittsweise unter einem Winkel von größer 0° zur Fügefläche verläuft. Auf diese Weise kann ein Verformen der Profilkante nach dem Vereinzelungsschritt schonender und kontrollierter erfolgen.

Ferner ist es möglich, das Nachbearbeitungswerkzeug mit wenigstens einer zweiten Bearbeitungsfläche auszubilden, die sich an die erste Bearbeitungsfläche anschließt und unter einem anderen Winkel zur Fügefläche verläuft. Eine solche Ausgestaltung ermöglicht eine besonders schonende und gezielte Bearbeitung der Profilenden bzw. der Schweißnaht vor und während des Fügeschrittes. Die erste Bearbeitungsfläche kann beispielsweise zum Verformen der Profilkante vor dem Stauchen dienen, während die zweite Bearbeitungsfläche während des Fügeschritts beim Stauchen der Profilenden entweder ein Fließen von Schmelzgut nach außen auf die Sichtflächen begrenzt oder zum Aufprägen einer entlang der Fügenaht verlaufenden Nut dient. Bei letzterem wird das Nachbearbeitungswerkzeug als eine Art Stempelwerkzeug in der zweiten Bearbeitungsstufe verwendet.

Das Gegenwerkzeug kann auch einen eigenen Antrieb, beispielsweise einen Drehantrieb, zur Ausführung des Vereinzelns ausgestattet oder damit verbunden sein.

Das Begrenzungselement, vorzugsweise die Trennkante, und/oder das Gegenwerkzeug können auf unterschiedliche Temperaturen aufwärm- oder abkühlbar ausgebildet sein. Auf diese Weise kann das Erkalten des Schmelzüberschusses für eine zuverlässige Vereinzelung gezielt beeinflusst werden.

Hinsichtlich der Materialeigenschaften kann zudem vorgesehen sein, dass das Gegenwerkzeug gegenüber der Trennkante widerstandsfähiger oder weniger widerstandsfähig gegen mechanischen Verschleiß ausgebildet ist.

Dabei sollten die Komponenten bevorzugt aus hochfestem, wärmebehandelten und/oder beschichteten Werkstoffen ausgeführt werden, um einen geringen Verschleiß zu gewährleisten. Der Verschleiß kann bspw. in einem Einlaufen des Gegenwerkzeuges auf seiner Mantelfläche vorliegen, mit der das Gegenwerkzeug über eine hohe Standzeit entlang der Trennkante des Begrenzungselementes abrollt.

Beispielsweise können die Begrenzungselemente aus wärmebehandeltem Messerstahl ausgeführt sein. Das Gegenwerkzeug kann aus einem Rundmaterial vorgesehen sein, welches ebenfalls eine Wärmebehandlung erfahren hat. Denkbar sind hier bspw. Stähle aus der Wälzlagerherstellung. Aufgrund der Wärmebehandlung kann das jeweilige Bauteil partiell oder vollständig gehärtet sein. Die Auswahl der Werkstoffe sowie die ggf. erfolgende Wärmebehandlung zur Einstellung der einzelnen Härtegrade der Komponenten auf signifikant unterschiedliche Werte kann erfolgen, um eines der beiden Bauteile, also entweder das Gegenwerkzeug oder die Trennkante bewusst als Verschleißteil mit einer vorgegebenen Standzeit vorzusehen.

Alternativ dazu ist es auch möglich, sowohl das Gegenwerkzeug als auch das Begrenzungselement auf sehr ähnliche oder gleiche Verschleißeigenschaften einzustellen, so dass über eine lange Standzeit zu kaum signifikanten Verschleiß an einem der Bauteile kommt.

Bevorzugt kann eine Höhen-Verstellung wenigstens eines Gegenwerkzeuges zur Einstellung unterschiedlicher Profilteildicken und/oder zur Einstellung unterschiedlicher Werkzeugüberdeckungen zwischen dem Gegenwerkzeug und der Fügefläche des Profilteils vorgesehen sein. Außerdem kann vorgesehen sein, dass die Höhen-Verstellung für eine Grob- und/oder Feinjustierung der Profildicke eingerichtet ist, wobei die Grobjustierung vorzugsweise in Millimeterschritten und die Feinjustierung, bspw. in Zehntelmillimeterschritten erfolgt. Das Gegenwerkzeug kann in der Höhe feinjustierbar sein, um eine verbesserte Einstellung zur Trennkannte zu gewährleisten, wobei es sich als vorteilhaft erwiesen hat, wenn das Gegenwerkzeug nur in einem kleinen Umfang in Kontakt zum Schmelzüberschuss zwischen Trennkannte und Fügefläche gelangt. Ziel ist dabei die Schmelze, in diesem Bereich nicht weiter zu vermischen und durch den Kontakt mit dem kühlen Werkzeug auch nicht zu stark abzukühlen.

In einem Ausführungsbeispiel kann das Gegenwerkzeug an der Sichtfläche, die auf der Profilauflage liegt, eine feste Höhenposition einnehmen und dort lediglich feinjustierbar sein. Das andere Gegenwerkzeug für das Vereinzeln an der gegenüberliegenden Sichtfläche kann auf unterschiedliche Profilhöhen einstellbar und feinjustierbar ausgebildet sein. Dies kann auch automatisiert oder manuell erfolgen. Auf diese Weise ist eine sehr hohe Flexibilität bei der Verarbeitung unterschiedlich geformter Profilteile gegeben.

Erfindungsgemäß hat es sich auch als vorteilhaft erwiesen, das Gegenwerkzeug unter einem Anstellwinkel α zur Ebene der Fügefläche anzuordnen. Unterschiedliche Winkelstellungen des Gegenwerkzeugen können das Vereinzelungsergebnis positiv beeinflussen und auch ein ungewolltes bereichsweises Abkühlen von Schmelze an der Fügefläche verringern. Bevorzugt kann die Winkelstellung des Gegenwerkzeuges dergestalt sein, dass das Gegenwerkzeug auf der der Fügefläche zugewandten Seite der Trennkante zur Fügefläche beabstandet ist.

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnung.

Dabei zeigen schematisch:
- Figur 1: eine schematische Ansicht eines zu fügenden Profilteils in einer Schweißmaschine,
- Figuren 2a und 2b: das Profilteil gemäß Figur 1 während des Positionierschritts am Profilanschlag,
- Figuren 3a und 3b: das Profilteil gemäß Figur 1 während des Anschmelzschrittes,
- Figuren 4a bis 4c: das Profilteil gemäß Figur 1 nach dem Anschmelzschritt,
- Figuren 5a bis 5d: das Profilteil gemäß Figur 1 unmittelbar vor dem Vereinzelungsschritt,
- Figuren 6a bis 6d: ein Funktionsschema zur Verdeutlichung möglicher Werkzeugstellungen während des Vereinzelungsschrittes,
- Figur 7: eine gegenüber der Figur 1 abgewandelte Variante mit alternativem Gegenwerkzeug,
- Figuren 8a und 8b: eine Übersichtsdarstellung einer erfindungsgemäßen Schweißmaschine,
- Figuren 9a bis 9c: Darstellungen alternativer Ausführungsformen eines Gegenwerkzeuges,
- Figur 10: eine Variante der Erfindung mit gekippter Gegenwerkzeuganordnung,
- Figuren 11a bis 11c: ein Funktionsschema des Nachbearbeitungsschrittes,
- Figuren 12a bis 12e: eine weitere Ausführungsform mit optional zweistufigem Nachbearbeitungsverfahren und
- Figuren 13 bis 13e: a detaillierte Ansichten, die jeweils zu den Figuren 12a bis 12e korrespondieren.

Gleiche oder gleichwirkende Bauteile werden in den nachfolgend dargestellten Figuren der Zeichnung anhand mehrerer Ausführungsformen mit Bezugszeichen versehen, um die Lesbarkeit zu verbessern.

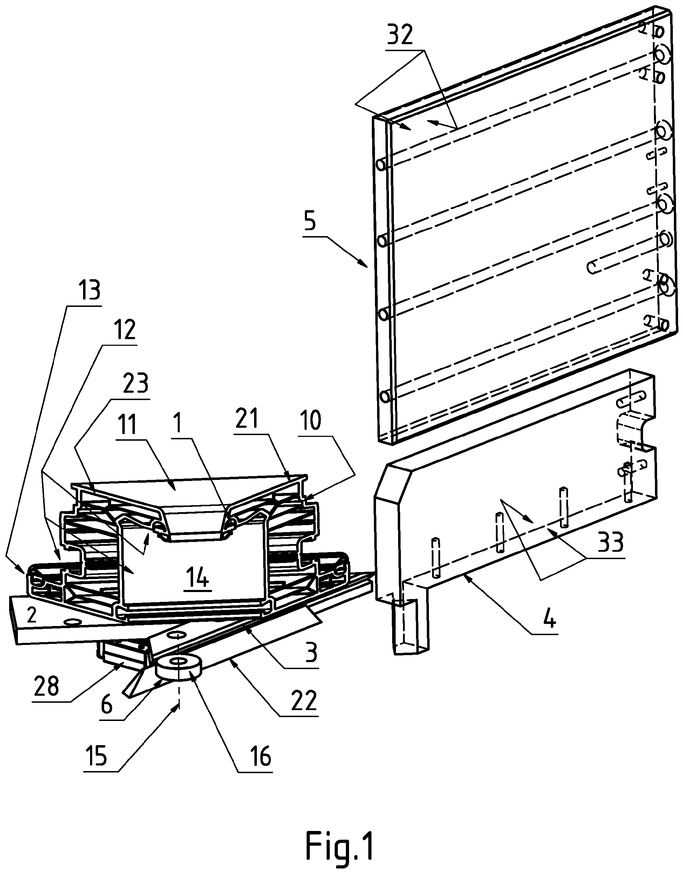

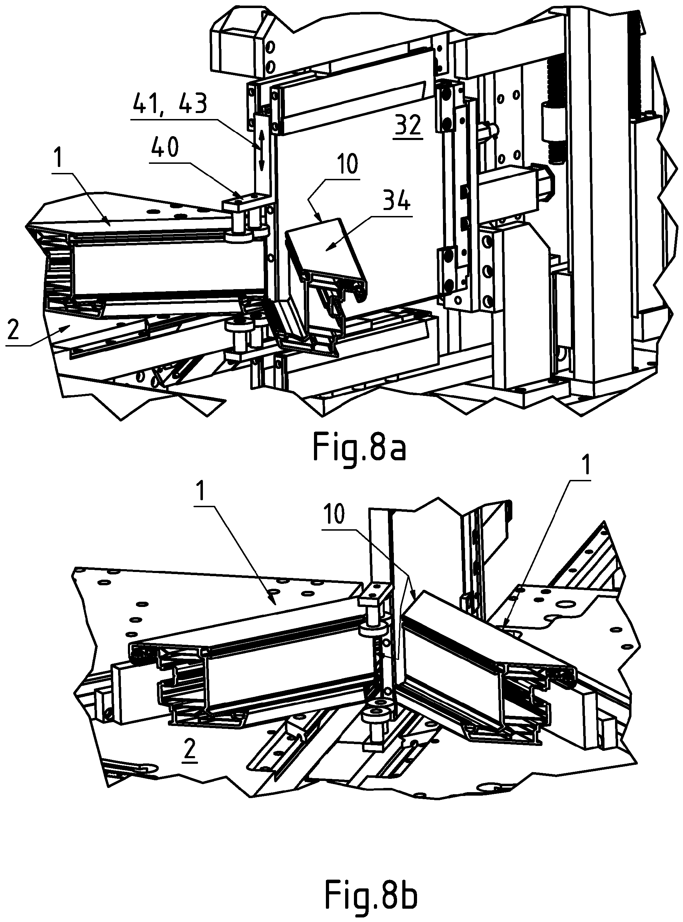

Die vorliegende Erfindung betrifft eine Vorrichtung 44 in Form einer Schweißmaschine, die ausschnittsweise in der Figur 1 dargestellt ist. In den Figuren 8a und 8b ist eine Übersicht auf eine erfindungsgemäße Vorrichtung 44 in Form einer Schweißmaschine dargestellt, bei welcher die zueinander zu fügenden Profilteile 1 und 34 erkennbar sind, die sich dort mit ihren Fügeflächen 10 gegenüberliegen. Der Einfachheit halber ist in den Figuren 1 bis 7 jedoch nur das Profilteil 1 dargestellt. Die jeweiligen Verfahrensschritte werden jedoch in der Regel an beiden Profilteilen 1, 34 gleichzeitig durchgeführt.

Figur 1 zeigt ein Profilteil 1, welches auf eine Profilauflage 2 der Vorrichtung aufgelegt und mittels einer nicht gezeigten Spanneinrichtung an der Profilauflage 2 festgelegt ist. An der Profilauflage 2 ist ein Begrenzungselement 3 angeordnet, das an der Außenfläche des Profilteils, hier an der unteren in Figur 1 verdeckten Sichtfläche 11, anliegt und dabei an die Fügefläche 10 des Profilteils 1 angrenzt. Weiterhin sind in der Figur 1 ein Profilanschlag 4 zum Positionieren und Ausrichten des Profilteils 1 auf der Profilauflage 2 gezeigt. An demselben Profilanschlag 4 wird auch ein zweites in die Vorrichtung eingelegtes Profilteil 34 ausgerichtet. Dieses zweite Profilteil 34, welches mit dem ersten Profilteil 1 verbunden werden soll, ist nur in den Figuren 8a und 8b dargestellt. Die Vorrichtung weist zudem ein Heizelement 5 auf, welches vorliegend als Heizspiegel ausgeführt ist.

Der Profilanschlag 4 und das Heizelement 5 sind jeweils eben ausgebildet. Die Heizflächen 32 des Heizelementes 5 sowie die Anschlagflächen 33 des Profilanschlags 4 verlaufen parallel zueinander, so dass die an dem Profilanschlag 4 ausgerichteten Profilteile 1, 34 bzw. die Fügeflächen 10 der Profilteile 1, 34 mit den Heizflächen 32 des Heizelementes 5 ausgerichtet werden.

Das Profilteil 1 ist vorliegend ein aus thermoplastischem Kunststoff, bspw. PVC, gebildetes Profilelement 1 zur Herstellung eines Fensterflügels. Das Profilteil 1 ist als Strangpressprofil mit mehreren parallel, quer und schräg zueinander verlaufenden Profilwänden 23 ausgebildet, deren äußerste Umrandung die Profilkante 21 bildet. Das Profilteil 1 weist dabei einerseits Sichtflächen 11 und Funktionsflächen 12 auf, die die Außenflächen des Profilteils 1 bilden. Die Sichtflächen 11 sind die im fertig montierten Zustand des Fensters nach außen sichtbaren Flächen. Die Funktionsflächen 12 sind diejenigen Flächen, die für die unterschiedlichen Funktionen des Fensterflügels erforderlich sind, wie bspw. der das Fenster gegenüber dem Fensterrahmen abdichtende Überschlag 13, die Stützfläche 14, die eine in das Fenster eingesetzte Fensterscheibe stützt, sowie weitere Funktionsflächen 12, an denen bspw. Scheibendichtungen angeordnet werden.

Die Vorrichtung weist ein Gegenwerkzeug 6 auf, vorliegend in Form einer Rolle, welches um eine Drehachse 15 drehbar gelagert ist. Dabei verläuft die Drehachse 15 etwa parallel zu der durch die Schnittfläche des Profilteils 1 gebildete Fügefläche 10 verläuft. Weiterhin ist in Figur 1 ein Nachbearbeitungswerkzeug 22 sowie eine Führung 28 für eine bewegliche Führung des Begrenzungselementes 3 dargestellt.

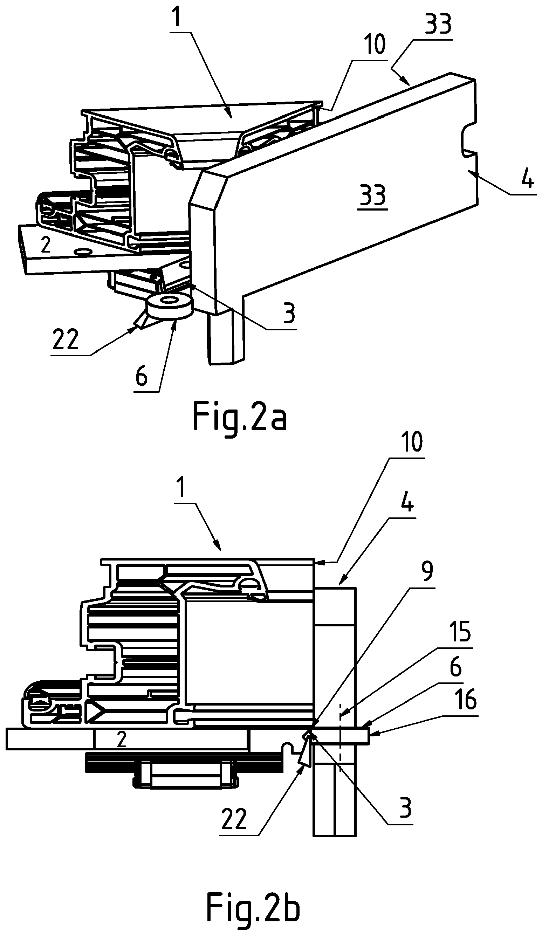

In den Figuren 2a und 2b ist der sogenannte Positionierschritt schematisch dargestellt, der Teil des erfindungsgemäßen Verfahrens sein kann. Bei diesem Positionierschritt wird das jeweilige Profilteil 1, 34 mit seiner Fügefläche 10 gegen eine Anschlagfläche 33 des Profilanschlags 4 gepresst, um die Fügefläche 10 an der Anschlagfläche 33 auszurichten. Die Positionierung beider Profilteile 1 und 34 kann gleichzeitig erfolgen, wenn diese gegen die Anschlagflächen 34 des Profilanschlags 4 gedrückt werden, um die jeweiligen Fügeflächen 10 gegenüber dem Profilanschlag 4 und somit mit dem Heizelement 5 sowie zueinander auszurichten.

Das Begrenzungselement 3 weist eine entlang der Fügefläche 10 verlaufende Trennkante 9 auf. Während des Positionierschrittes wird ein Spalt zwischen den jeweiligen Anschlagflächen 33 und der jeweiligen Trennkante 9 freigelassen, so dass die Fügeflächen 10 vollflächig an dem Profilanschlag zu liegen kommen. Nachdem das Profilteil 1 an den Profilanschlag 4 ausgerichtet ist, erfolgt eine derart feste Verspannung des Profilteils 1 auf der Profilauflage 2, dass in den folgenden Schritten keine wesentliche Bewegung zwischen dem Profilteil 1 und der Profilauflage 2 erfolgen kann.

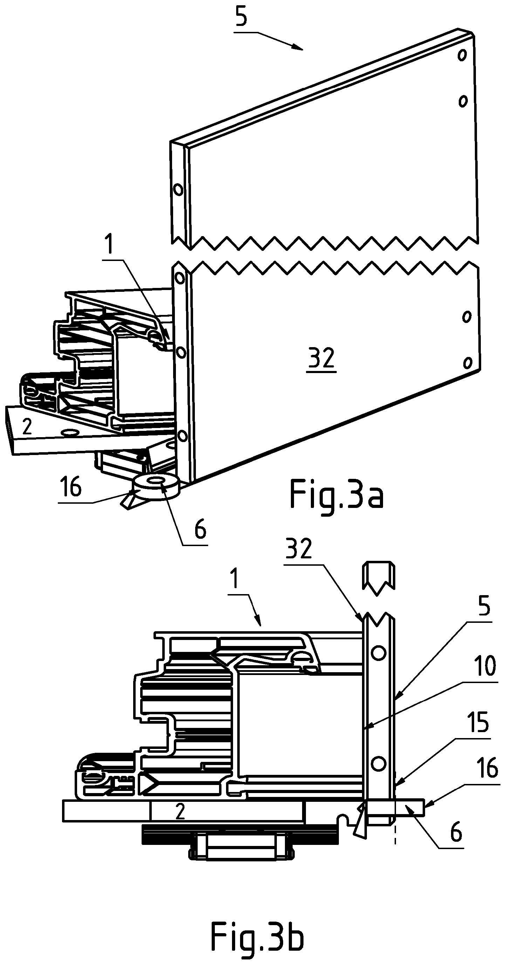

In den Figuren 3a und 3b ist der Anschmelzschritt dargestellt, bei welchem die Fügefläche 10 des Profilteils 1 gegen eine Heizfläche 32 des Heizspiegels, Heizelements 5, gedrückt wird, um das Profilteil 1 an seiner Fügefläche 10 stirnseitig anzuschmelzen. Dazu werden die jeweiligen Profilauflagen 2 in Richtung zu dem Heizelement 5 verfahren, welches nach dem Entfernen des Profilanschlags 4 zwischen die Fügeflächen 10 der Profilteile 1, 34 gefahren wurde.

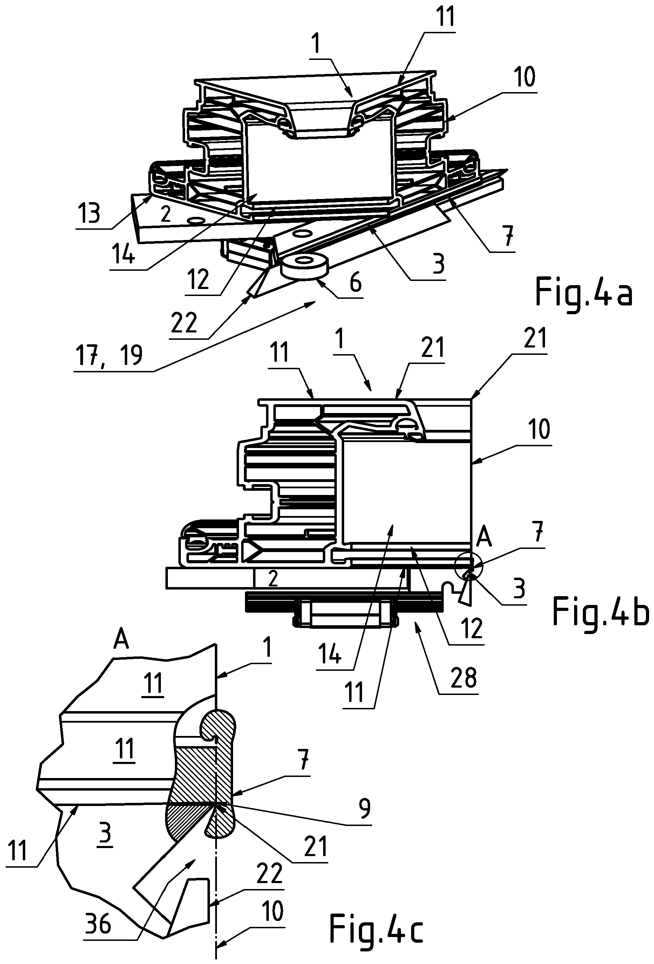

Nach dem Abschluss des Anschmelzschrittes wird das Heizelement 5 zwischen den Profilteilen 1, 34 entfernt, wie dies in den Fig. 4 a-c und 5a-d gezeigt ist. Ein bei dem Anschmelzschritt entstehender Schmelzüberschuss 7, welcher während des Anschmelzens über die Trennkanten 9 des Begrenzungselementes 3 von der Fügefläche 10 in den Bereich eines Hinterschnittes 36 des Begrenzungselementes 3 ausgetreten ist, wird durch eine Bewegung des Gegenwerkzeuges 6 entlang der Trennkante 9 vereinzelt. Dabei wird das Gegenwerkzeug 6 entlang der Trennkante 9 des Begrenzungselementes 3 verfahren und kommt mit der an der Fügefläche 10 vorliegenden Schmelze sowie mit dem über die Trennkante 9 hinausgetretenen Schmelzüberschusses 7 in Kontakt. Das Gegenwerkzeug 6 verjüngt bzw. spaltet den Schmelzüberschuss 7 an seiner an der Trennkante 9 befindlichen Wurzel soweit, dass der Schmelzüberschuss 7 sich von der an der Fügefläche 10 verbleibenden Schmelze abtrennt.

Dazu rollt das Gegenwerkzeug 6, das im vorliegenden Ausführungsformbeispiel als Rolle ausgebildet ist, mit seiner Mantelfläche 16 über die Trennkante 9 des Begrenzungselementes 3 ab, wodurch die nach außen getretene Schmelze, der Schmelzüberschuss 7, 8 abgetrennt wird.

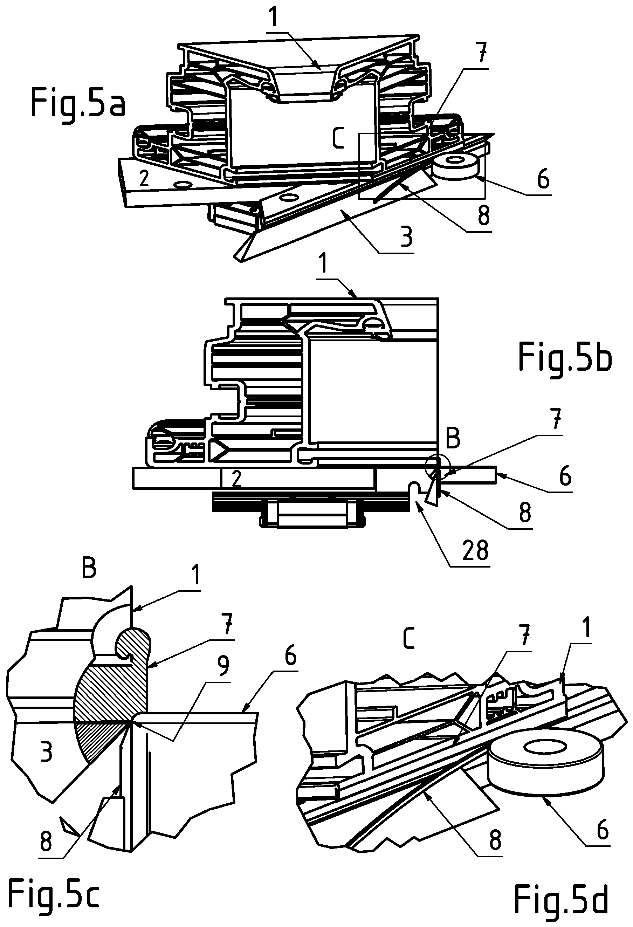

In den Figuren 4 und 5 erfolgt die Gegenwerkzeugbewegung 19 als längs der Trennkante 9 verlaufender Bewegungsanteil 17. Die Gegenwerkzeugbewegung 19 kann gleichzeitig mit dem Entfernen des Heizelementes 5 erfolgen, wenn bspw. das Heizelement 5 sowie das Gegenwerkzeug 6 an einem gemeinsamen Halter 43 gehalten und auf diese Weise mit dem Heizelement 5 bewegungsgekoppelt sind, so wie dies in der Figur 8a bzw. 8b dargestellt ist. Alternativ dazu kann zunächst das Heizelement 5 entfernt werden und erst danach die Gegenwerkzeugbewegung 19 erfolgen, wobei das Gegenwerkzeug 6 dazu mittels eines eigenen Antriebs bewegt werden kann.

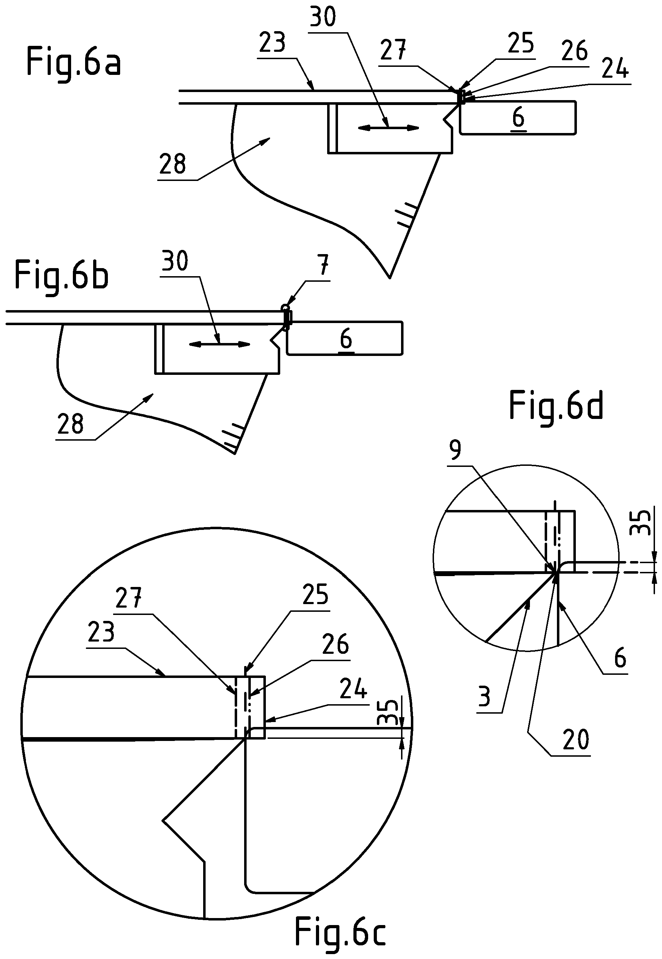

Das Gegenwerkzeug 6 kann unter Federbelastung gegen die Trennkante 9 des Begrenzungselementes 3 gedrückt werden. Alternativ dazu kann das Gegenwerkzeug 6 unter Einhaltung eines vorgegebenen Werkzeugabstandes 20, der in der Figur 6d dargestellt ist, entlang der Trennkante 9 des Begrenzungselementes 3 geführt werden. Dadurch verjüngt sich der Schmelzüberschuss 7 an seiner an die Fügefläche 10 angrenzenden Wurzel soweit, dass es zu einer Abtrennung, also Vereinzelung des Schmelzüberschusses 7 kommt. Der vereinzelte Schmelzüberschuss 8 kann als ein zusammenhängender Span vorliegen, der sich während des Vereinzelungsschrittes durch unmittelbare Verfestigung des zuvor flüssigen oder teigigen Schmelzüberschusses 7 ausbildet.

Auch das Begrenzungselement 3 kann unter Federvorspannung in Richtung der Fügefläche 10 geführt sein, um einerseits während des Anschmelzschrittes einen möglichst engen Spalt zwischen der Heizfläche 32 und der Trennkante 9 zu bilden und andererseits eine entsprechende Federvorspannung gegenüber dem Gegenwerkzeug 6 zu gewährleisten.

Das Gegenwerkzeug 6 kann bspw. als Kugellager ausgeführt sein, welches mit seinem äußeren Lagerring 6 die Mantelfläche 16 bildet.

Wie aus den Figuren 8a und 8b erkennbar, kann für jede Außenfläche, insbesondere Sichtfläche 11 des jeweiligen Profilteils 1, 34 ein eigenes Gegenwerkzeug vorgesehen sein, so dass bei der gleichzeitigen Bearbeitung von zwei gegenüberliegenden Sichtflächen 11 zweier Profilteile 1, 34 insgesamt vier Gegenwerkzeuge 6 eingesetzt werden.

Das Begrenzungselement 3 kann in seiner Funktion zusätzlich durch das Nachbearbeitungswerkzeug 22 ergänzt sein, welches in dem Anschmelzschritt ein nach außen Treten des Schmelzüberschusses 7 verringern kann. Gleichzeitig kann das Nachbearbeitungswerkzeug 22, welches etwa mit der Fügeebene 10 abschließt, eine Abstützung für das Gegenwerkzeug 6 bilden, an welcher das Gegenwerkzeug 6 abrollen kann.

In den Figuren 5a bis 5d ist die Vereinzelung des Schmelzüberschusses 7 zu dem vereinzelten Schmelzüberschuss 8 dargestellt. Insbesondere in der Figur 5d ist die Ausbildung des vereinzelten Schmelzüberschusses 8 als ein einziger zusammenhängender Span erkennbar.

Die Figuren 6a bis 6d zeigen ein Funktionsschema mit dem verdeutlicht werden soll, dass das Begrenzungselement 3 eine in Richtung des Gegenwerkzeugs 6 gerichtete oder eine entgegengesetzte Bewegung 30 ausführen kann, die entweder durch das an der Trennkante 7 anliegende Gegenwerkzeug 6 oder durch einen separaten, mit dem Begrenzungselement 3 verbundenen Aktor erfolgen kann. Auf diese Weise kann der Werkzeugabstand 20 bzw. die Andruckkraft zwischen Gegenwerkzeug 6 und Begrenzungselement 3 eingestellt werden.

In der Figur 6c sind die unterschiedlichen und für das Fügen des Profilteils 1 relevanten Arbeitsbereiche eingezeichnet. Das Profil wird zunächst auf die Profilzuschnittlänge 24 abgelängt, welche um den sogenannten Abbrand länger ist, als das für das gefügte Profilteil geforderte Endmaß. Weiterhin ist die Schmelzendpunktlinie 26 eingezeichnet, welche den Bereich kennzeichnet, bis zu welchem das Heizelement 5 während des Anschmelzschrittes in das Material des Profilteils 1 vordringt. Das dabei aufgeschmolzene Material weicht als Schmelzüberschuss 7 seitlich aus.

Des Weiteren ist die Trennbereichslinie 25 zwischen der Schmelzpunktlinie 26 und der Fügeendpunktlinie 27 eingezeichnet, welche diejenige Ebene kennzeichnet, bis zur welcher das Gegenwerkzeug 6 während des Vereinzelungsschrittes in das aufgeschmolzene bzw. erweichte Material des Profilteils 1 eindringt, vorliegend in die zu bearbeitende Profilwand 23. Schließlich kennzeichnet die Fügeendpunktlinie 27 den Bereich, bis zu welchem das Profilteil 1 an seiner Profilwand 23 während des anschließenden Fügeschrittes gestaucht wird. Das Verfahren kann auch in der Gestalt modifiziert werden, dass die Trennbereichslinie 25 sowie die Schmelzendpunktlinie 26 zusammenfallen oder, dass die Fügeendpunktlinie 27 und die Trennbereichslinie 25 zusammenfallen. Bevorzugt ist jedoch die in der Figur 6c eingezeichnete Anordnung, bei der die Trennbereichslinie 25 näher an der Schmelzendpunktlinie 26 vorgesehen ist als an der Fügeendpunktlinie 27.

Die Position der Trennbereichslinie 25, der Schmelzendpunktlinie 26 und der Fügeendpunktlinie 27 können je nach Profil, Material und Profilform in gewissen Grenzen variiert werden. Alternativ kann es auch sinnvoll sein, dass die Schmelzendpunktlinie 26 zwischen der Trennbereichslinie 25 und der Fügeendpunktlinie 27 liegt. Dies beispielsweise aber nicht zwingend dann, wenn bei bestimmten Varianten der Erfindung ein Werkzeugabstand 20 zwischen der Trennkante 9 des Begrenzungselementes 3 sowie dem Gegenwerkzeug 6 vorgesehen ist, beispielsweise im Bereich von unter 0,5 mm, insbesondere 0,1 mm bis 0,2 mm. Dann soll ein direkter Kontakt zwischen dem Gegenwerkzeug 6 und der Trennkante 9 aus Verschleißgründen unterbleiben. Zur Einstellung des Werkzeugabstands 20 kann auch die Bewegung 30 des Begrenzungselementes 3 innerhalb seiner Führung 28 genutzt werden.

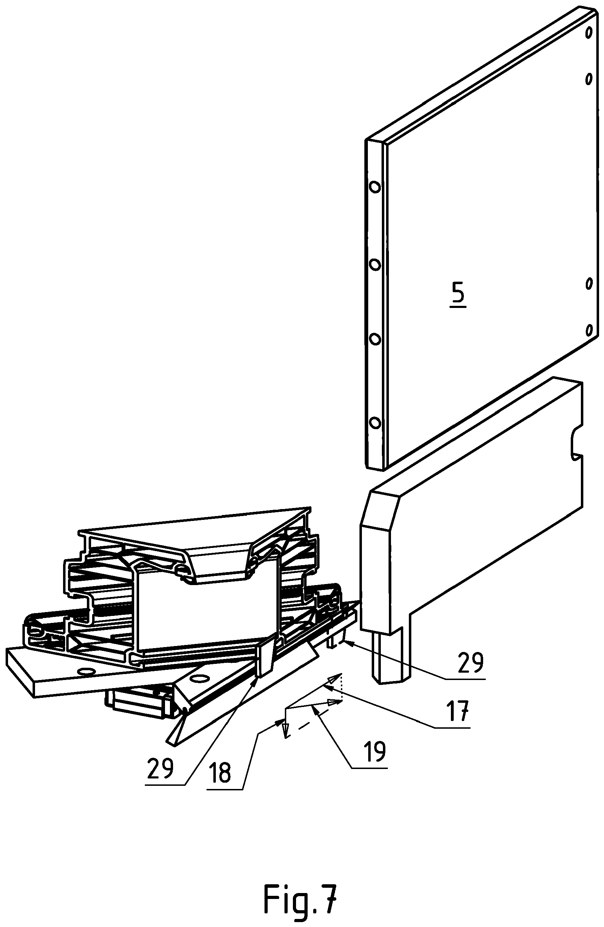

Die Figur 7 zeigt eine alternative Ausführungsform eines Gegenwerkzeuges 29, welches nicht wie die zuvor dargestellte Rolle eine Abrollbewegung vollzieht, sondern in einer Schubbewegung mit einem entlang der Trennkante verlaufenden Bewegungsanteil 17 sowie einem quer dazu verlaufenden Bewegungsanteil 18 geführt wird. Insgesamt ergibt sich dann eine schräg zu Trennkante 9 verlaufende Bewegung 19, um den Schmelzüberschuss 7 zu vereinzeln. Die einzelnen Bewegungsanteile 17, 18 sowie die daraus resultierende Bewegung 19 sind schematisch in der Figur 7 dargestellt. Das links in der Figur 7 dargestellte Gegenwerkzeug 29 befindet sich dabei in seiner Anfangsposition, das durch gestrichelte Linien dargestellte Gegenwerkzeug 29 in seiner Endposition nach der Vereinzelung. Es kann eine an der Trennkante 9 entlanggeführte Schneidkante aufweisen, mittels welcher der Schmelzüberschuss 7 vereinzelt wird. Das Gegenwerkzeug 29 kann ebenfalls wie das Gegenwerkzeug 6 mit der Bewegung des Heizelementes 5 gekoppelt sein.

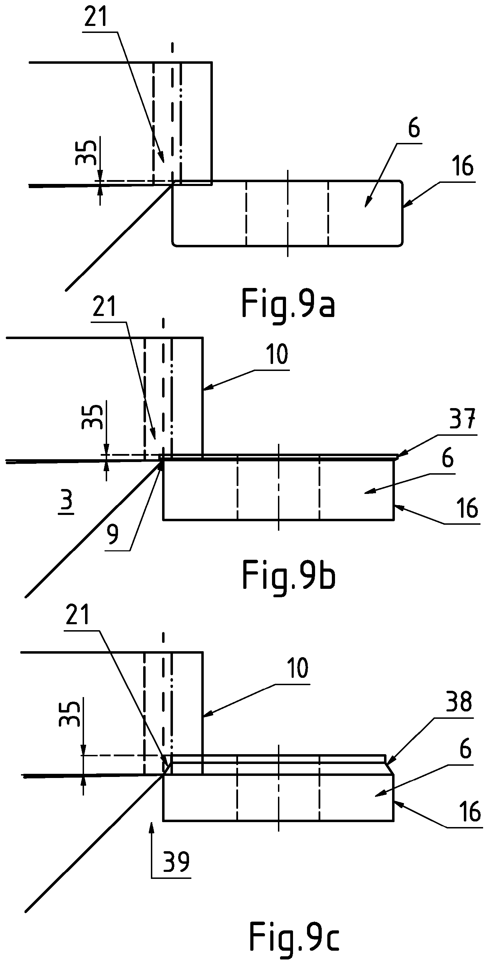

In den Figuren 9a bis 9c sind unterschiedliche Varianten des als Rolle ausgebildeten Gegenwerkzeugs 6 dargestellt. In der Figur 9a ist das Gegenwerkzeug 6 als zylindrische Rolle ausgebildet, welche eine im Querschnitt gerade Mantelfläche 16 aufweist. Das in der Figur 9b gezeigte Gegenwerkzeug 6 weist einen zusätzlichen Kragen 37 auf, der im Durchmesser größer als die übrige Mantelfläche 16 ist und welcher im Bereich der Überdeckung 35 des Gegenwerkzeugs 6 mit der Fügefläche 10 die Trennkante 9 des Begrenzungselementes 3 hintergreift. Bei dieser Variante des Gegenwerkzeugs 6 gemäß 9b werden das Begrenzungselement 3 und das Gegenwerkzeug 6 in der Art von Scher-Schneidwerkzeugen zu einander geführt.

Bei der Variante des Gegenwerkzeugs 6 gemäß Figur 9c ist ein Einstich 38 vorgesehen, um das Gegenwerkzeug 6 im Bereich seiner Überdeckung mit der Fügefläche 10 zu verjüngen.

Die Stärke der Überdeckung 35 zwischen dem Gegenwerkzeug 6 und der Fügefläche 10 des Profilteils 1 kann neben der Optimierung der Vereinzelung des Schmelzüberschusses 7 auch dazu genutzt werden, die Profilkante 21 bereits zusätzlich so zu bearbeiten, dass sie zur Fügefläche 10 hin verformt wird, also ihr sozusagen eine Richtung 39 aufgeprägt wird. In der aufgeprägten Richtung 39 soll sich die Profilkante 21 während des Fügeschrittes verformen, so dass eine an der fertigen Fügeverbindung ausgebildete V-Nut zumindest ansatzweise entsteht.

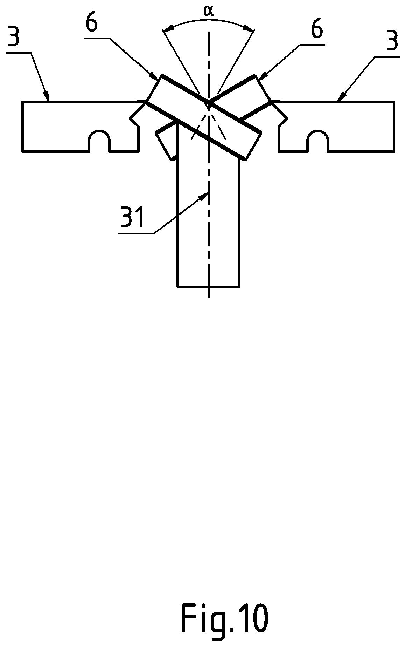

Ebenfalls zum Bewirken eines solchen Effektes, aber auch zur Optimierung der Vereinzelung des Schmelzüberschusses kann das Gegenwerkzeug 6, insbesondere das als Rolle ausgebildete Gegenwerkzeug 6 unter einem Anstellwinkel α bezüglich der Fügefläche 10 bzw. einer dazu parallel verlaufenden Fügeebene 31 angestellt sein. Dies ist in der Figur 10 schematisch dargestellt. Der dabei verwendete Anstellwinkel α kann je nach Anwendungsfall vorgegeben werden und durch einen entsprechenden Halter oder eine Verstellung der Aufhängung des Gegenwerkzeugs 6 erreicht werden.

Die in den Figuren 9a bis 9c dargestellte Überdeckung 35 lässt sich mittels einer Feinjustierung auf vorzugsweise 0,1 mm genau einstellen. Eine Einrichtung zur Feinjustierung wird bevorzugt, an dem Gegenwerkzeughalter 14 vorgesehen, welcher ohnehin mit einer Verstellung 41 zur Anpassung an unterschiedliche Profildicken ausgestattet sein kann. Die Unterscheidung zwischen der Einstellung und Anpassung an unterschiedliche Profildicken sowie der Feinjustierung liegt darin, dass die Höhenverstellung 41 für den Gegenwerkzeughalter 40 etwa auf 1 mm genau verstellbar sein sollte und die Feineinstellung zur Festlegung der Überdeckung 35 etwa auf 0,1 mm genau einstellbar ist. Je nach Anwendungsfall können die absoluten Werte auch abweichen. Als vorteilhaft hat sich erwiesen, wenn eine Feinjustierung eine wenigstens 10-mal höhere Genauigkeit gestattet als die eigentliche Höhenverstellung des Gegenwerkzeugs.

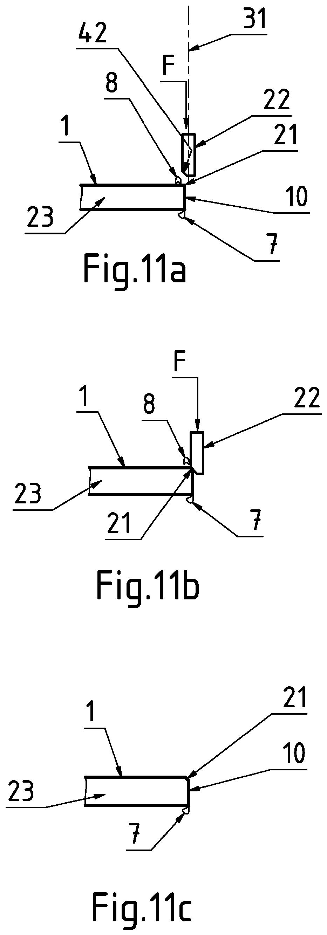

Schließlich wird in den Figuren 11a bis 11c noch ein optionaler Nachbearbeitungsschritt dargestellt, bei welchem das Nachbearbeitungswerkzeug 22 die Profilkante 21 des jeweiligen Profilteils 1, 34 in dem durch das Gegenwerkzeug 6, 29 bearbeiteten Bereich zumindest abschnittsweise nach Innen in Richtung zur Fügefläche 10 verformt. Das Gegenwerkzeug 22 kann dabei beispielsweise in der Fügeebene 31 verfahrbar sein und mit einer vorzugsweise schräg zur Fügefläche 10 gestellten Bearbeitungsfläche 42 die Profilkante 21 unter Aufbringung einer Bearbeitungskraft F nach Innen verformen, so dass sich beim anschließenden Fügen eine V-Nut zwischen den Profilteilen 1 und 34 im Bereich der Verschweißung ergibt.

Das Nachbearbeitungswerkzeug 22 kann alternativ auch während des Fügeschrittes, also während des Stauchens und/oder im Anschluss daran zum Einsatz kommen.

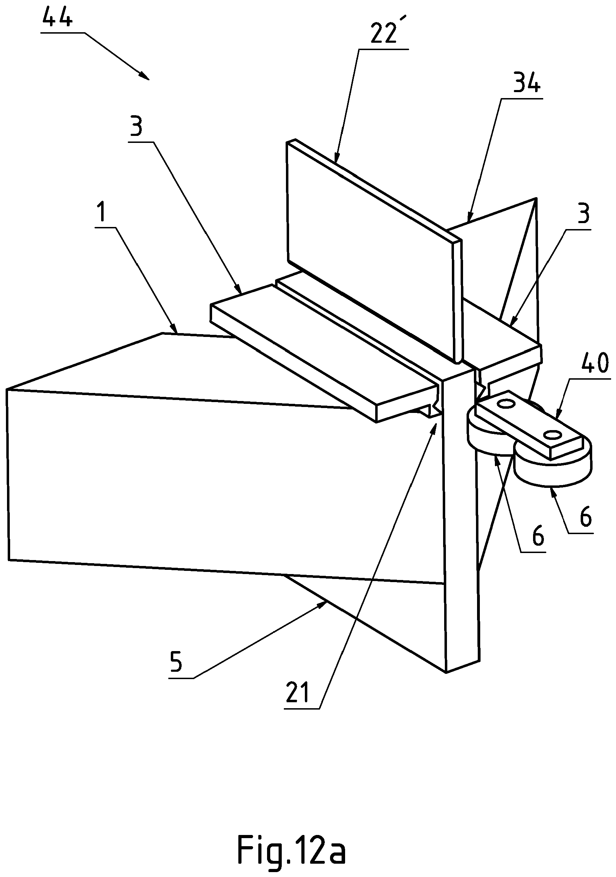

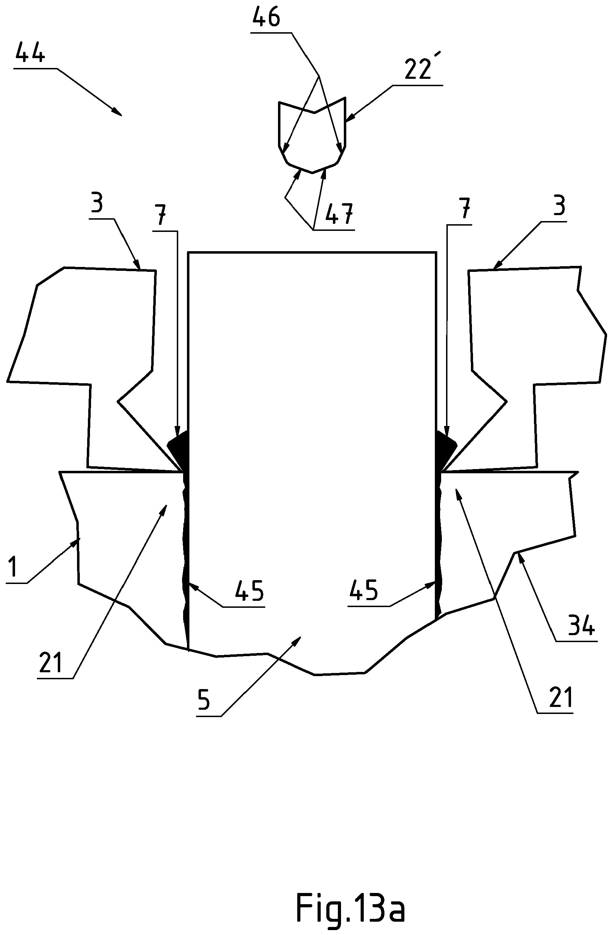

Eine solche Variante der Erfindung ist in den schematischen Figuren 12a bis 12e sowie in den jeweils dazu korrespondierenden Figuren 13a bis 13e dargestellt.

Wie in diesen Figuren zu erkennen, weist die Vorrichtung 44 ein abgewandeltes Nachbearbeitungswerkzeug 22' auf, welches gleichzeitig zur Bearbeitung der beiden miteinander zu fügenden Profilteile 1 und 34 verwendet wird.

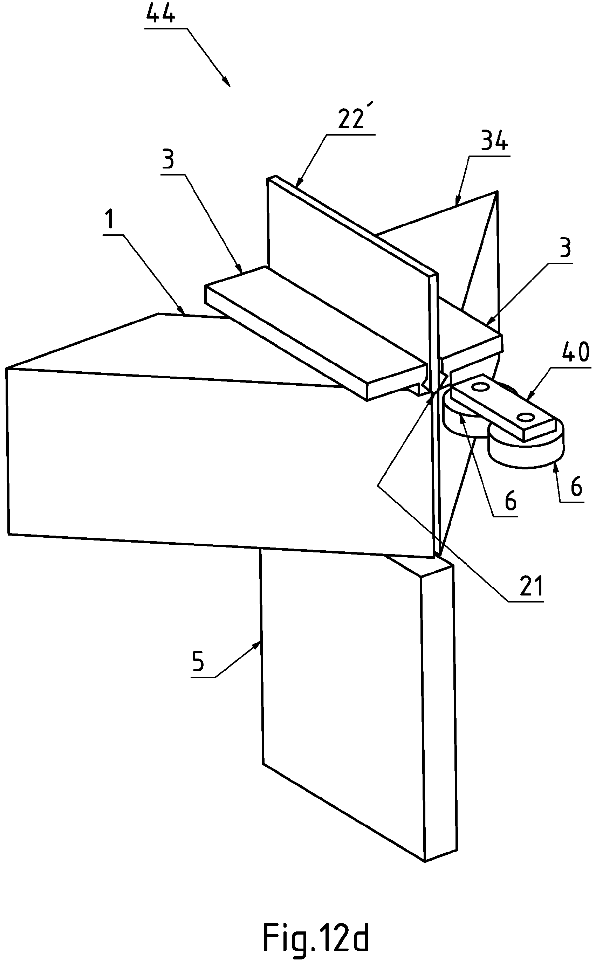

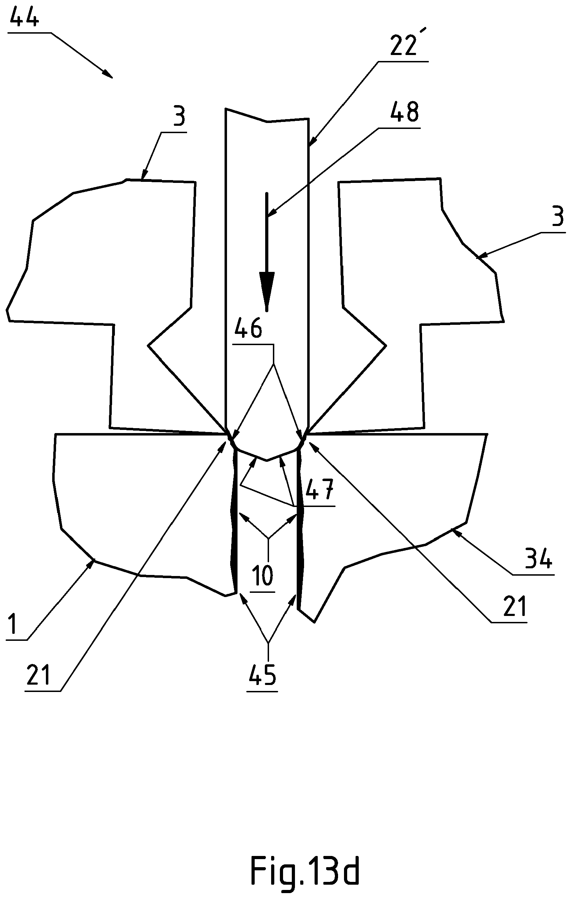

Wie aus dem in den Figuren 12a bis 12e und 13a bis 13e hervorgeht, erfolgt zunächst eine Vereinzelung des Schmelzeüberschusses 7 unter Verwendung des Gegenwerkzeuges 6. Nachdem der vereinzelte Schmelzüberschuss 8 entfernt ist, was ab den Figuren 12d bzw. 13d gezeigt ist, erfolgt eine Bearbeitung der beiden Profilteile 1, 34 mittels des Nachbearbeitungswerkzeugs 22`. Im vorliegenden Beispiel erfolgt eine zweistufige Nachbearbeitung, bei welcher zunächst der jeweiligen Profilkante 21 eine nach innen auf die Fügefläche 10 gerichtete Bewegungsrichtung 48 aufgeprägt wird, so dass sich beim anschließenden Fügen eine V-Nut zwischen den Profilteilen 1 und 34 im Bereich der Verschweißung ergibt.

Hierzu weist das im vorliegenden Ausführungsbeispiel verwendete Nachbearbeitungswerkzeug 22' spiegelsymmetrisch zueinander angeordnete Bearbeitungsflächen 46 auf, welche bei dem hier gewählten Ausführungsbeispiel unter einem Winkel von < 45° zur Fügefläche 10 verlaufen.

Um sicherzustellen, dass sich beim anschließenden Fügen, also beim Stauchen der Profilteile 1 und 34 zueinander, tatsächlich eine V-Nut ausbildet und nicht doch ein noch ggf. vorhandener Schmelzeüberschuß 7 von der Fügefläche 10 nach außen in Richtung der Sichtflächen 11 tritt, weist das Nachbearbeitungswerkzeug 22' die Bearbeitungsflächen 47 auf, welche unter einem Winkel von > 45° zur Fügefläche 10 spiegelsymmetrisch ausgebildet sind. Die Bearbeitungsflächen 47 bilden sozusagen eine "Negativform" der im Bereich der Schweißstelle gewünschten V-Nut.

Die Bearbeitungsflächen 46 und 47 können auch durch eine einzige Bearbeitungsfläche gebildet sein, bspw. eine abgerundete Fläche.

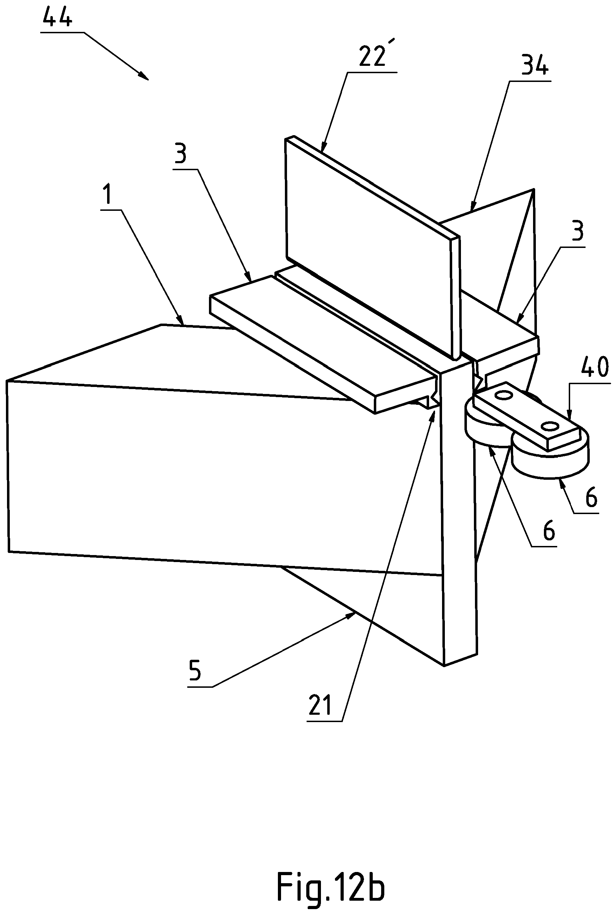

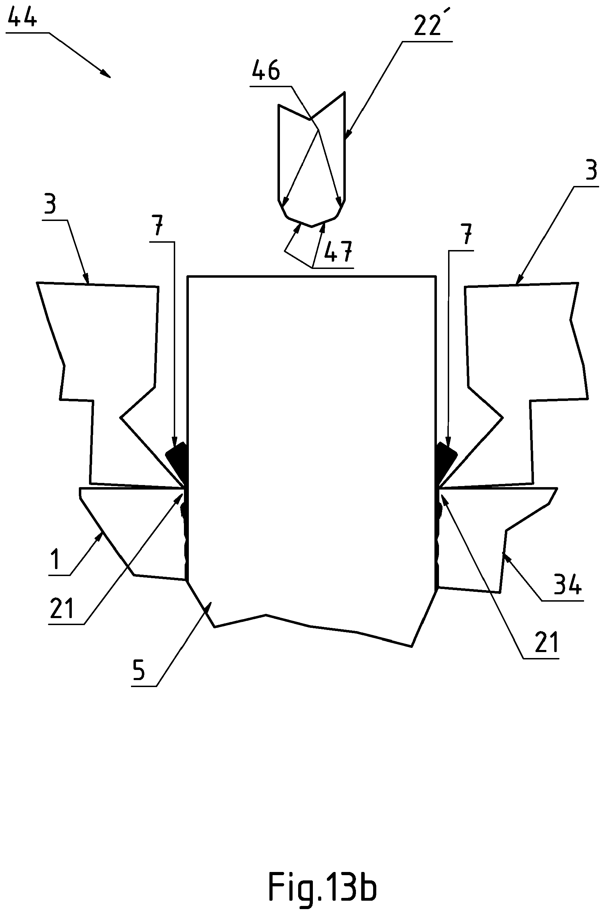

Der Verfahrensablauf unter Verwendung des Nachbearbeitungswerkzeugs 22' ist nachstehend näher beschrieben. Dabei zeigen die Figuren 12a und 13a die Vorrichtung 44 während des Anschmelzschrittes mit offenen Begrenzungselementen 3, die Figuren 12b und 13b die Vorrichtung 44 mit zur Fügefläche 10 hin verschobenen Begrenzungselementen 3.

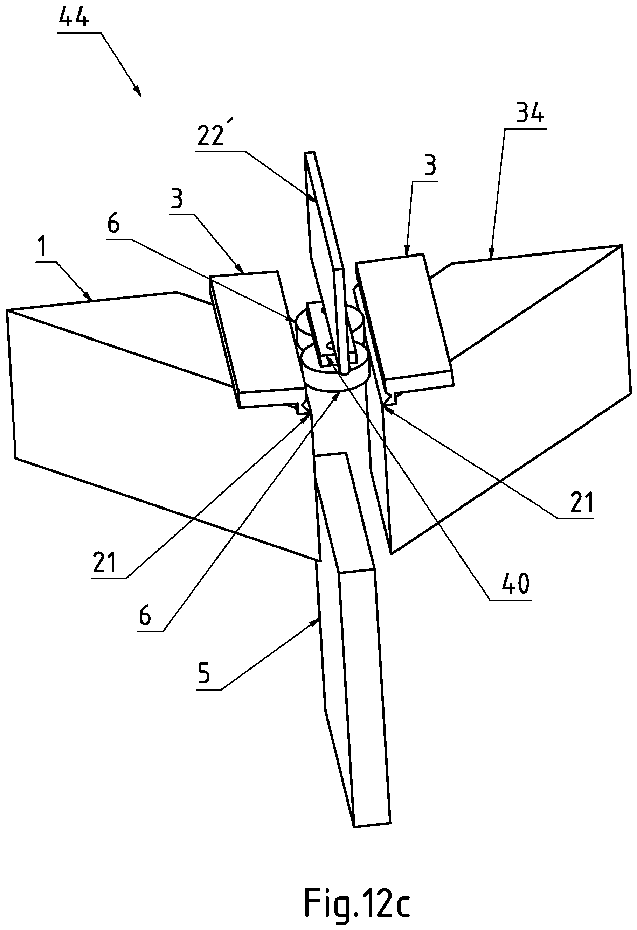

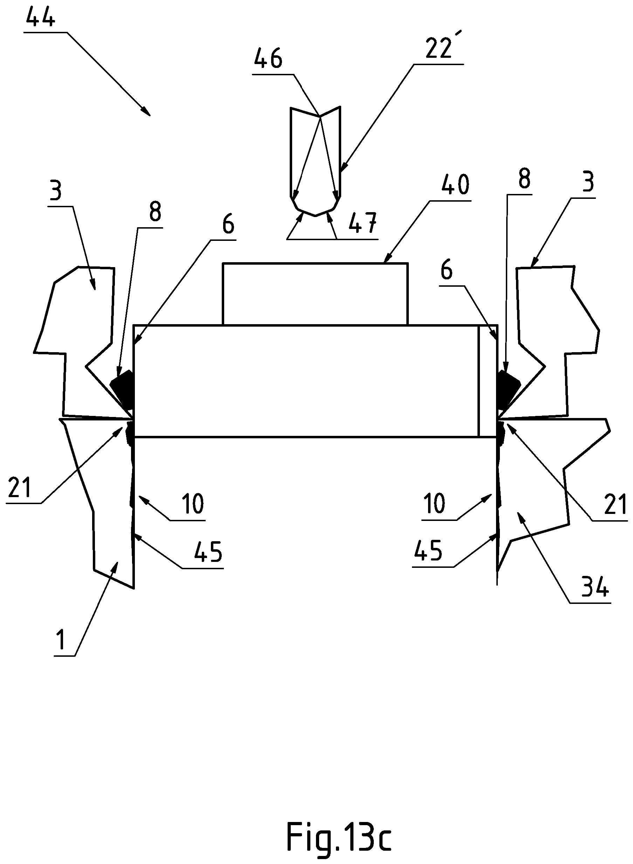

Die Figuren 12c und 13c zeigt die Vorrichtung 44 nach dem Anschmelzen mit auseinandergefahrenen Profilteilen 1, 34 während der Bearbeitung mittels der Gegenwerkzeuge 6 in Form von Rollen. Die Rollen fahren entlang der Profilkante 21 und rollen an den Begrenzungselementen 3 ab, um den Schmelzüberschuss 7, in dem auch angeschmolzene Schutzfolie enthalten sein kann, zu vereinzeln.

In den Figuren 12d und 13d ist die Vorrichtung 44 mit wieder angenäherten Profilteilen 1 und 34 dargestellt. Die Fügeflächen 10 der Profilteile 1 und 34 sind in dieser Stellung noch beabstandet zueinander. Sie liegen jedoch schon so nahe beieinander, dass das dazwischengefahrene Gegenwerkzeug 22` mit dessen Bearbeitungsflächen 46 die Profilkanten 21 bearbeiten kann und damit Schmelzgut in Richtung der Fügeflächen 10 nach innen verdrängt. Dabei wird dem Schmelzgut und den unter dem Einfluss der Schmelzwärme erweichten Profilkanten 21 eine nach innen, also in Richtung auf die Fügeflächen 10 gerichtete Bewegungsrichtung aufprägt.

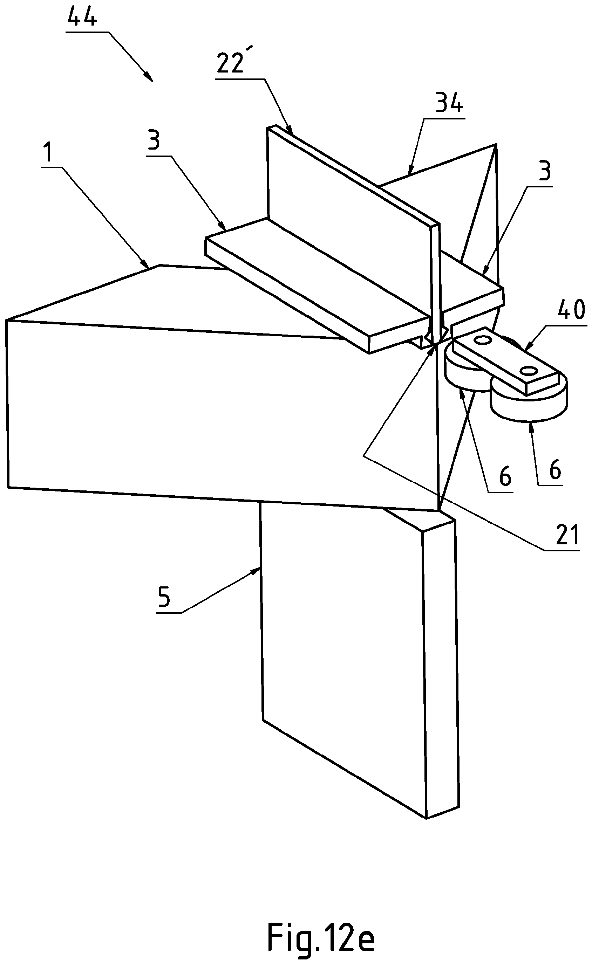

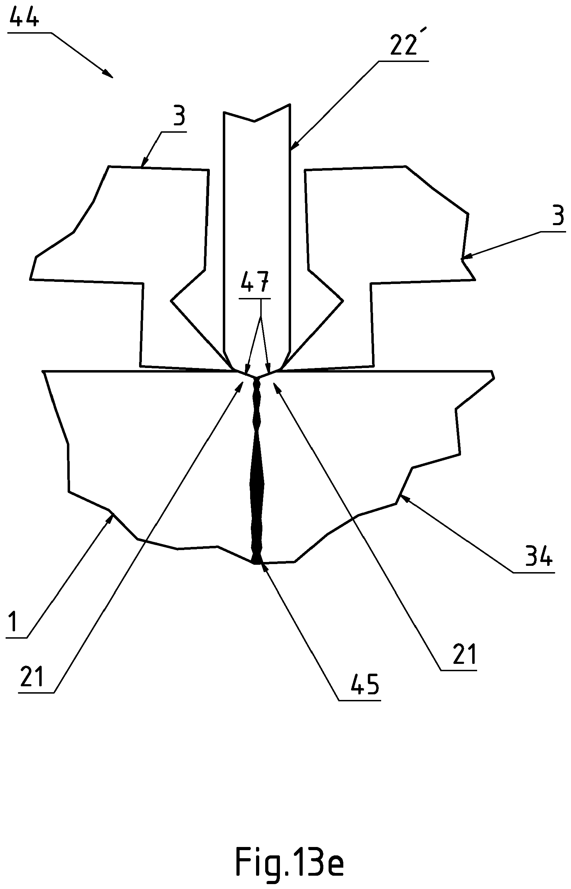

Die Figuren 12e und 13e zeigen die Vorrichtung 44 während des Fügens, wobei die jeweils an der Fügefläche 10 zum Verschweißen vorgesehene Schmelze 45 miteinander in Kontakt gebracht wird und die Profilteile 1, 34 gegeneinander gestaucht werden. In diesem Bearbeitungsschritt kann das Nachbearbeitungswerkzeug 22`, wie in Figuren 12e und 13e gezeigt, zu einem gewissen Grad aus dem Bereich zwischen den Fügeflächen 10 zurückgezogen.

Die Bearbeitungsflächen 47 kommen ggf. jedoch mit den Profilkanten 21 in der Weise in Kontakt, dass die Ausbildung einer V-Nut an der fertigen Schweißverbindung sichergestellt ist.

Das Nachbearbeitungswerkzeug 22` kann auch während des Fügeschritts nach dem Stauchen der Profilteile 1 und 34 als eine Art Stempel eingesetzt werden, der das Schmelzgut im Bereich der Profilkanten 21 an der Fügestelle abschließend verformt und ihnen eine Endgestalt aufprägt.

In dieser Weise kann eine Nachbearbeitung zweistufig durch Aufprägen einer auf die Fügefläche gerichteten Bewegungsrichtung 48 und ein nachträgliches Begrenzen des Fließens bzw. Verformen von Schmelzgut in Richtung der Sichtflächen 11 erfolgen.

Denkbar ist aber beispielsweise auch, ein Bearbeitungswerkzeug zu verwenden, welches beispielsweise in der DE 10 2015 107 121 A1, dort in Figur 6 sowie im zugehörigen Absatz [0066] als Formteil 22 beschrieben wird. Auch ist es möglich, ein aus der DE 10 2016 104 785 A1 bekanntes, dort als Formteil 4 bezeichnetes Werkzeug als Nachbearbeitungswerkzeug zu verwenden. Die Bewegung des dortigen Formteils ist in den Figuren der DE 10 2016 104 785 A1 durch einen Doppelpfeil gekennzeichnet. Insbesondere kann das Nachbearbeitungswerkzeug wie in der dortigen Figur 7 gezeigt nach den Alternativen A, B und C ausgebildet sein, die im Absatz [0038] der DE 10 2016 104 785 A1 beschrieben sind.

Ebenfalls möglich ist es, dass das Gegenwerkzeug 29 gemäß Figur 7 und das Gegenwerkzeug 6, bspw. gemäß Figur 1 in der Weise zu kombinieren, dass des Gegenwerkzeug eine kombinierte Abroll- und Schubbewegung mit den Bewegungsanteilen 17 und 18 vollzieht.

Jedenfalls hat sich gezeigt, dass die vor dem Fügeschritt erfolgende Vereinzelung des Schmelzüberschusses 7 zu deutlich besseren Fertigungsergebnissen führt, als dies aus den bisher bekannten Vorrichtungen möglich war. Der dabei oftmals als einzelner Span gebildete Schmelzüberschuss 8 kann nachfolgend auf einfache Weise, beispielsweise durch Absaugen oder Druckluft, entfernt werden.

Auf den Sichtflächen 11 vorhandene Schutzfolien, die der Einfachheit halber hier nicht dargestellt sind, können ohne vorherige Bearbeitung auf dem Profilteil verbleiben und stören die Ästhetik und die mechanische Festigkeit der erfindungsgemäß entstandenen Fügeverbindung nicht oder nur unwesentlich.

### Bezugszeichenliste

- 1: Profilteil
- 2: Profilauflage
- 3: Begrenzungselement
- 4: Profilanschlag
- 5: Heizelement
- 6: Gegenwerkzeug
- 7: Schmelzüberschuss
- 8: Vereinzelter Schmelzüberschuss
- 9: Trennkante
- 10: Fügefläche
- 11: Sichtfläche
- 12: Funktionsfläche
- 13: Überschlag
- 14: Stützfläche (für Fensterscheibe)
- 15: Drehachse
- 16: Mantelfläche
- 17: Bewegungsanteil (längs)
- 18: Bewegungsanteil (quer)
- 19: Gegenwerkzeugbewegung (resultierend, schräg)
- 20: Werkzeugabstand
- 21: Profilkante
- 22: Nachbearbeitungswerkzeug
- 23: Profilwand
- 24: Profilzuschnittlänge
- 25: Trennbereichslinie
- 26: Schmelzendpunktlinie
- 27: Fügeendpunktlinie
- 28: Führung
- 29: Gegenwerkzeug (alternative Ausführungsform)
- 30: Bewegung des Begrenzungselementes
- 31: Fügeebene
- 32: Heizfläche
- 33: Anschlagfläche
- 34: Profilteil
- 35: Überdeckung
- 36: Hinterschnitt
- 37: Kragen
- 38: Einstich
- 39: Richtung
- 40: Gegenwerkzeughalter
- 41: Verstellung
- 42: Bearbeitungsfläche
- 43: Halter
- 44: Vorrichtung
- 45: Schmelze
- 46: Bearbeitungsfläche
- 47: Bearbeitungsfläche
- 48: Bewegungsrichtung

## Patentansprüche

1. Verfahren zum Verbinden von wenigstens zwei Profilteilen (1, 34), insbesondere zum Herstellen von aus einem thermoplastischen Kunststoff bestehenden Tür- oder Fensterrahmen bzw. -flügeln, wobei die wenigstens zwei an relativ zueinander verfahrbaren Profilauflagen (2) festgelegten Profilteile (1) in einem Anschmelzschritt mittels eines Heizelementes (5) jeweils an einer endseitigen Fügefläche (10) angeschmolzen und nach Entfernung des Heizelementes (5) in einem Fügeschritt mit den angeschmolzenen Fügeflächen (10) so lange gegeneinander gepresst werden, bis die dort miteinander in Kontakt gebrachte Schmelze unter Ausbildung einer Schweißverbindung abkühlt und sich verfestigt, wobei an wenigstens einer Außenfläche wenigstens eines Profilteils (1) ein Begrenzungselement (3) mit einer Trennkante (9) auf- und/oder anliegt, das den Austritt eines Schmelzüberschusses (7) am Übergang der jeweiligen Fügefläche (10) zur Außenfläche des Profilteils (1) während des Anschmelzschrittes kontrolliert und/oder begrenzt, **wobei** in einem vor dem Fügeschritt erfolgenden Vereinzelungsschritt ein Gegenwerkzeug (6, 29) entlang der Trennkante (9) des Begrenzungselementes (3) durch die Schmelze geführt wird, um den über die Trennkante (9) ausgetretenen Schmelzüberschuss (7) zu vereinzeln, wobei das Gegenwerkzeug (6, 29) eine Abrollbewegung vollzieht.

2. Verfahren nach Anspruch 1, **dadurch gekennzeichnet, dass** das Gegenwerkzeug (6, 29) während der Vereinzelung des Schmelzüberschusses (7) zumindest abschnittsweise mit der Trennkante (9) in Kontakt gebracht wird.

3. Verfahren nach Anspruch 2, **dadurch gekennzeichnet, dass** das Gegenwerkzeug (6, 29) an die Trennkante (9) angelegt wird, insbesondere federbelastet.

4. Verfahren nach einem der vorhergehenden Ansprüche, **dadurch gekennzeichnet, dass** das Begrenzungselement (3) in der Ebene der Außenfläche des Profilteils (1), auf der es aufliegt, relativ zur Fügefläche (10) in zumindest zwei Positionen verfahren wird, insbesondere in eine vorverlagerte Position während des Vereinzelungsschrittes und in eine zurückgezogene Position während des Fügeschrittes oder umgekehrt.

5. Verfahren nach einem der vorhergehenden Ansprüche, **dadurch gekennzeichnet, dass** das Gegenwerkzeug (6, 29) mit einem vorgegebenen Werkzeugabstand (20), vorzugsweise kleiner als 0,5 mm, insbesondere im Bereich kleiner 0,2 mm und größer 0 mm, besonders bevorzugt bei 0,1 mm, zur Trennkante (9) geführt ist.

6. Verfahren nach Anspruch 1, **dadurch gekennzeichnet, dass** das Gegenwerkzeug (6, 29) messerartig ausgebildet ist und eine Schubbewegung ausführt, die sich aus einem längs der Trennkante (9) verlaufenden Bewegungsanteil (17) und einem quer dazu verlaufenden Bewegungsanteil (18) zusammensetzt, so dass sich eine gegenüber der Trennkante (9) schräg verlaufende Bewegung (19) des Gegenwerkzeugs (6, 29) ergibt.

7. Verfahren nach einem der vorhergehenden Ansprüche, **dadurch gekennzeichnet, dass** die die Fügefläche (10) nach außen begrenzende Profilkante (21) des jeweiligen Profilteils in dem durch das Gegenwerkzeug (6, 29) bearbeiteten Bereich durch das Gegenwerkzeug (6, 29) selbst oder ein separat bewegbares Nachbearbeitungswerkzeug (22, 22`) zumindest abschnittsweise nach innen in Richtung zur Fügefläche (10) verformt wird.

8. Verfahren nach Anspruch 6, **dadurch gekennzeichnet, dass** auf die Vereinzelung des Schmelzüberschusses (7) ein Nachbearbeitungsschritt mit einem Nachbearbeitungswerkzeug (22, 22`) durchgeführt wird, in welchem die Verformung der Profilkante (21) erfolgt.

9. Verfahren nach einem der Ansprüche 7 oder 8, **dadurch gekennzeichnet, dass** das Nachbearbeitungswerkzeug (22') gleichzeitig beide Profilteile (1, 34) bearbeitet.

10. Verfahren nach einem der Ansprüche 7 bis 9, **dadurch gekennzeichnet, dass** die Bearbeitung durch das Nachbearbeitungswerkzeug (22') derart erfolgt, dass sowohl die jeweilige Profikante (21) der Profilteile (1, 34) mittels des Nachbearbeitungswerkzeugs (22') vor dem Fügeschritt verformt als auch während oder nach Beendigung des Fügeschritts der sich durch die Schweißnaht ergebenden Fügelinie eine Form aufgeprägt wird.

11. Verfahren nach Anspruch 10, **dadurch gekennzeichnet, dass** die Bearbeitung durch das Nachbearbeitungswerkzeug (22') zweistufig derart erfolgt, dass in der ersten Bearbeitungsstufe die jeweilige Profikante (21) der Profilteile (1, 34) mittels des Nachbearbeitungswerkzeugs (22') vor dem Fügeschritt verformt wird und in der zweiten Bearbeitungsstufe während oder nach Beendigung des Fügeschritts der sich durch die Schweißnaht ergebenden Fügelinie mittels des Nachbearbeitungswerkzeugs (22`)eine Form aufgeprägt wird.

12. Verfahren nach einem der Ansprüche 7 bis 11, **dadurch gekennzeichnet, dass** das Nachbearbeitungswerkzeug (22') während des Fügeschritts ein Fließen von Schmelzgut in Richtung der Sichtfläche (11) begrenzt.

13. Verfahren nach Anspruch 7, **dadurch gekennzeichnet, dass** die Profilkante (21) zusammen mit der Bewegung des Gegenwerkzeugs entlang der Trennkante (9) verformt wird.

14. Vorrichtung zum Verbinden von wenigstens zwei Profilteilen (1, 34), insbesondere zur Herstellung von aus thermoplastischem Kunststoff bestehenden Profilteilen (1, 34), zu Tür- oder Fensterrahmen bzw. -flügeln, mit wenigstens zwei relativ zueinander verfahrbaren Profilauflagen (2) zum Festlegen von wenigstens zwei Profilteilen (1, 34) und einem zwischen die Profilauflagen (2) einführbaren Heizelement (5) zum jeweils endseitigen Anschmelzen der wenigstens zwei festgelegten Profilteile (1) an ihren Fügeflächen (10), wobei wenigstens ein Begrenzungselement (3) zum Auf- oder Anliegen an wenigstens einer Außenfläche wenigstens eines Profilteils (1, 34), vorzugsweise zum Kontaktieren wenigstens einer Sichtfläche (11) und/oder wenigstens einer Funktionsfläche (12) der Profilteile (1), vorgesehen ist, das mit einer Trennkante (9) zum Kontrollieren und/oder Begrenzen des Austritts eines Schmelzüberschusses (7) zur Außenfläche des Profilteils (1) am Übergang zur jeweiligen Fügefläche (10) ausgebildet ist, **wobei** die Vorrichtung ein Gegenwerkzeug (6, 29) zum Vereinzeln des über die Trennkante (9) ausgetretenen Schmelzüberschusses (7) aufweist, das entlang der Trennkante (9) und durch die Schmelze verfahrbar ist, **dadurch gekennzeichnet, dass** das Gegenwerkzeug (6, 29) dreh- oder schwenkbar bezüglich der Trennkante (9) geführt ist.

15. Vorrichtung nach Anspruch 14, **dadurch gekennzeichnet, dass** das Gegenwerkzeug (6, 29) als Rolle ausgeführt ist.

16. Vorrichtung nach Anspruch 15, **dadurch gekennzeichnet, dass** das die Bearbeitungsfläche, insbesondere die Mantelfläche (16) des Gegenwerkzeuges (6, 29) konturiert ist.

17. Vorrichtung nach einem der Ansprüche 14 bis 16, **dadurch gekennzeichnet, dass** ein Nachbearbeitungswerkzeug (22, 22`) zum Bearbeiten der Profilkante (21) des wenigstens einen Profilteils (1) vorgesehen ist, wobei das Nachbearbeitungswerkzeug (22, 22`) vorzugsweise als Rolle, oder als Leiste oder als Wippe, vorzugsweise jeweils mit V-förmiger Prägekontur ausgebildet ist.

18. Vorrichtung nach einem der Ansprüche 14 bis 17, **dadurch gekennzeichnet, dass** das Heizelementes (5) und/oder das Gegenwerkzeug (6, 29) und/oder ein Nachbearbeitungswerkzeug (22, 22`) zum Verformen der Profilkante (21) zumindest teilweise bewegungsgekoppelt und/oder mit einen eigenen Antrieb versehen oder verbunden sind.

19. Vorrichtung nach einem der Ansprüche 14 bis 18, **dadurch gekennzeichnet, dass** das Nachbearbeitungswerkzeug (22') zum gleichzeitigen Bearbeiten der beiden miteinander zu fügenden Profilteile (1, 34) ausgebildet ist.

20. Vorrichtung nach einem der Ansprüche 14 bis 19, **dadurch gekennzeichnet, dass** das Nachbearbeitungswerkzeug (22') eine mit dem Profilteil (1, 34) in Kontakt bringbare Bearbeitungsfläche (46) aufweist, die zumindest abschnittsweise unter einem Winkel von größer 0° zur Fügefläche (10) verläuft.

21. Vorrichtung nach Anspruch 20, **dadurch gekennzeichnet, dass** das Nachbearbeitungswerkzeug (22') wenigstens eine zweite Bearbeitungsfläche (47) aufweist, die sich an die erste Bearbeitungsfläche (46) anschließt und unter einem von dieser verschiedenen Winkel zur Fügefläche (10) verläuft.

22. Vorrichtung nach einem der Ansprüche 14 bis 21, **dadurch gekennzeichnet, dass** das Begrenzungselement (3) und/oder die Trennkante (9), und/oder das Gegenwerkzeug (6, 29) auf unterschiedliche Temperaturen erwärm- oder kühlbar sind.

23. Vorrichtung nach einem der Ansprüche 14 bis 22, **dadurch gekennzeichnet, dass** das Gegenwerkzeug (6, 29) gegenüber der Trennkante (9) widerstandsfähiger oder weniger widerstandsfähig gegen mechanischen Verschleiß ausgebildet ist.

24. Vorrichtung nach einem der Ansprüche 14 bis 23, **dadurch gekennzeichnet, dass** eine Höhen-Verstellung (41) wenigstens eines Gegenwerkzeuges (6, 29) zur Einstellung unterschiedlicher Profilteildicken und/oder einer Werkzeugüberdeckung (35) zwischen dem Gegenwerkzeug (6, 29) und der Fügefläche (10) des Profilteils (1) vorgesehen ist.

25. Vorrichtung nach Anspruch 24, **dadurch gekennzeichnet, dass** die Höhen-Verstellung (41) für eine Grob- und/oder Feinjustierung der Profildicke eingerichtet ist, wobei die Grobjustierung vorzugsweise in Millimeterschritten und die vorzugsweise Feinjustierung in Zehntelmillimeterschritten erfolgt.

26. Vorrichtung nach einem der Ansprüche 14 bis 25, **dadurch gekennzeichnet, dass** das Gegenwerkzeug (6, 29) unter einem Anstellwinkel (α) zur Ebene der Fügefläche (10) einstellbar ist.

## Claims

1. Method for connecting at least two profile parts (1, 34), in particular for producing door frames or door leaves, or window frames or window casements, consisting of a thermoplastic material, wherein, in an incipient-melting step, the at least two profile parts (1), secured on profile supports (2) which can be displaced relative to one another, are incipiently melted in each case on an end-side joining surface (10) by means of a heating element (5) and, once the heating element (5) has been removed, in a joining step, they are pressed against one another, by way of the incipiently melted joining surfaces (10), until such time as the molten materials brought into contact with one another there cool and solidify to form a weld connection, wherein a limiting element (3) with a separating edge (9) rests and/or butts against at least one outer surface of at least one profile part (1), and this limiting element controls and/or limits the escape of excess molten material (7) at the transition of the respective joining surface (10) to the outer surface of the profile part (1) during the incipient-melting step, **wherein,** in an isolating step which takes place prior to the joining step, a mating tool (6, 29) is guided through the molten material along the separating edge (9) of the limiting element (3), in order to isolate the excess molten material (7) which has escaped over the separating edge (9), wherein the mating tool (6, 29) performs a rolling movement.

2. Method according to Claim 1, **characterized in that**, while the excess molten material (7) is being isolated, the mating tool (6, 29) is brought into contact at least to some extent with the separating edge (9).

3. Method according to Claim 2, **characterized in that** the mating tool (6, 29) is positioned, in particular spring-loaded, against the separating edge (9).

4. Method according to one of the preceding claims, **characterized in that**, in the plane of the outer surface of the profile part (1) on which it rests, the limiting element (3) is displaced relative to the joining surface (10) into at least two positions, in particular into an advanced position during the isolating step and into a retracted position during the joining step, or vice versa.

5. Method according to one of the preceding claims, **characterized in that** the mating tool (6, 29) is guided at a predetermined distance (20) in relation to the separating edge (9) of preferably smaller than 0.5 mm, in particular ranging from smaller than 0.2 mm and larger than 0 mm, particularly preferably at a distance of 0.1 mm.

6. Method according to Claim 1, **characterized in that** the mating tool (6, 29) is designed in the manner of a blade and performs a pushing movement made up of a movement component (17) running along the separating edge (9) and a movement component (18) running transversely thereto, and this results in a movement (19) of the mating tool (6, 29) which runs obliquely in relation to the separating edge (9).

7. Method according to one of the preceding claims, **characterized in that**, in the region processed by the mating tool (6, 29), the profile edge (21) of the respective profile part, this profile edge delimiting the joining surface (10) in the outward direction, is deformed by the mating tool (6, 29) itself, or by a separately movable finishing tool (22, 22'), at least to some extent inwards in the direction of the joining surface (10).

8. Method according to Claim 6, **characterized in that** the step of isolating the excess molten material (7) is followed by a finishing step, using a finishing tool (22, 22'), in which the profile edge (21) is deformed.

9. Method according to either of Claims 7 and 8, **characterized in that** the finishing tool (22') processes the two profile parts (1, 34) at the same time.

10. Method according to one of Claims 7 to 9, **characterized in that** the processing by the finishing tool (22') takes place such that, in addition to the respective profile edge (21) of the profile parts (1, 34) being deformed by means of the finishing tool (22') prior to the joining step, the joining line resulting from the weld seam has a stamped shape applied to it during or following the joining step.

11. Method according to Claim 10, **characterized in that** the processing by the finishing tool (22') takes place in two stages such that, in the first processing stage, the respective profile edge (21) of the profile parts (1, 34) is deformed by means of the finishing tool (22') prior to the joining step and, in the second processing stage, the joining line resulting from the weld seam has a stamped shape applied to it by means of the finishing tool (22') during or following the joining step.

12. Method according to one of Claims 7 to 11, **characterized in that**, during the joining step, the finishing tool (22') limits a flow of molten material in the direction of the visible surface (11).

13. Method according to Claim 7, **characterized in that** the profile edge (21) is deformed together with the mating tool being moved along the separating edge (9).

14. Apparatus for connecting at least two profile parts (1, 34), in particular for producing profile parts (1, 34) consisting of thermoplastic material, to give door frames or door leaves, or window frames or window casements, having at least two profile supports (2), which can be displaced relative to one another and are intended for securing at least two profile parts (1, 34), and having a heating element (5), which can be introduced between the profile supports (2) and is intended to provide for the respectively end-side incipient melting of the at least two secured profile parts (1) on the joining surfaces (10) thereof, wherein at least one limiting element (3) is provided for resting or butting against at least one outer surface of at least one profile part (1, 34), preferably for establishing contact with at least one visible surface (11) and/or at least one functional surface (12) of the profile parts (1), and this limiting element is formed with a separating edge (9) for controlling and/or limiting the escape of excess molten material (7) to the outer surface of the profile part (1) at the transition to the respective joining surface (10), **wherein** the apparatus has a mating tool (6, 29) for isolating the excess molten material (7) which has escaped over the separating edge (9), and this mating tool can be displaced along the separating edge (9) and through the molten material, **characterized in that** the mating tool (6, 29) is guided such that it can rotate or pivot in relation to the separating edge (9).

15. Apparatus according to Claim 14, **characterized in that** the mating tool (6, 29) is designed in the form of a roller.

16. Apparatus according to Claim 15, **characterized in that** the processing surface, in particular the lateral surface (16), of the mating tool (6, 29) is contoured.

17. Apparatus according to one of Claims 14 to 16, **characterized in that** a finishing tool (22, 22') is provided for processing the profile edge (21) of the at least one profile part (1), wherein the finishing tool (22, 22') is designed preferably in the form of a roller or of a bar or rocker, preferably in each case with a V-shaped stamping contour.

18. Apparatus according to one of Claims 14 to 17, **characterized in that** the heating element (5) and/or the mating tool (6, 29) and/or a finishing tool (22, 22'), for deforming the profile edge (21), are at least partly coupled in terms of movement and/or are provided with, or connected to, a dedicated drive.

19. Apparatus according to one of Claims 14 to 18, **characterized in that** the finishing tool (22') is designed for simultaneously processing the two profile parts (1, 34) which are to be joined to one another.

20. Apparatus according to one of Claims 14 to 19, **characterized in that** the finishing tool (22') has a processing surface (46) which can be brought into contact with the profile part (1, 34) and runs, at least to some extent, at an angle of greater than 0° in relation to the joining surface (10).

21. Apparatus according to Claim 20, **characterized in that** the processing tool (22') has at least one second processing surface (47), which adjoins the first processing surface (46) and runs at a different angle from the first processing surface in relation to the joining surface (10).

22. Apparatus according to one of Claims 14 to 21, **characterized in that** the limiting element (3) and/or the separating edge (9) and/or the mating tool (6, 29) can be heated or cooled to different temperatures.

23. Apparatus according to one of Claims 14 to 22, **characterized in that** the mating tool (6, 29) is designed to be more resistant to mechanical wear, or less resistant to mechanical wear, in relation to the separating edge (9).

24. Apparatus according to one of Claims 14 to 23, **characterized in that** a height adjuster (41) of at least one mating tool (6, 29) is provided for setting different profile-part thicknesses and/or an amount of overlap (35) between the mating tool (6, 29) and the joining surface (10) of the profile part (1).

25. Apparatus according to Claim 24, **characterized in that** the height adjuster (41) is designed for coarse adjustment and/or fine adjustment of the profile thickness, wherein the coarse adjustment is done preferably in increments of millimetres and the preferably fine adjustment is done in increments of tenths of a millimetre.

26. Apparatus according to one of Claims 14 to 25, **characterized in that** the mating tool (6, 29) can be set at a positioning angle (α) in relation to the plane of the joining surface (10).

## Revendications

1. Procédé pour relier au moins deux pièces profilées (1, 34), en particulier pour fabriquer des cadres ou des battants de portes ou de fenêtres constitués d'une matière synthétique thermoplastique, les au moins deux pièces profilées (1) fixées à des supports de profilés (2) déplaçables les uns par rapport aux autres étant respectivement fondues au niveau d'une surface d'assemblage (10) côté extrémité au moyen d'un élément chauffant (5) dans une étape de fonte et, après le retrait de l'élément chauffant (5), étant pressées les unes contre les autres par les surfaces d'assemblage (10) fondues dans une étape d'assemblage jusqu'à ce que la masse fondue qui y est mise en contact refroidisse et se solidifie en formant une liaison soudée, un élément de limitation (3) doté d'un bord de séparation (9) reposant sur et/ou s'appuyant contre au moins une surface extérieure d'au moins une pièce profilée (1), lequel élément de limitation contrôle et/ou limite la sortie d'un excès de masse fondue (7) à la transition de la surface d'assemblage (10) respective par rapport à la surface extérieure de la pièce profilée (1) pendant l'étape de fonte, un outil conjugué (6, 29) étant guidé à travers la masse fondue le long du bord de séparation (9) de l'élément de limitation (3) dans une étape de séparation s'effectuant avant l'étape d'assemblage, afin de séparer l'excès de masse fondue (7) sortant sur le bord de séparation (9), l'outil conjugué (6, 29) effectuant un mouvement de roulement.

2. Procédé selon la revendication 1, **caractérisé en ce que** l'outil conjugué (6, 29) est amené en contact, au moins dans certaines parties, avec le bord de séparation (9) pendant la séparation de l'excès de masse fondue (7).

3. Procédé selon la revendication 2, **caractérisé en ce que** l'outil conjugué (6, 29) est appliqué contre le bord de séparation (9), en particulier de manière sollicitée par ressort.

4. Procédé selon l'une des revendications précédentes, **caractérisé en ce que** l'élément de limitation (3) est déplacé dans le plan de la surface extérieure de la pièce profilée (1), sur lequel il repose, par rapport à la surface d'assemblage (10) dans au moins deux positions, en particulier dans une position avancée pendant l'étape de séparation et dans une position en retrait pendant l'étape d'assemblage ou inversement.

5. Procédé selon l'une des revendications précédentes, **caractérisé en ce que** l'outil conjugué (6, 29) est guidé à une distance d'outil (20) prédéfinie, de préférence inférieure à 0,5 mm, en particulier dans la plage de moins de 0,2 mm et de plus de 0 mm, de manière particulièrement préférée de 0,1 mm, par rapport au bord de séparation (9).

6. Procédé selon la revendication 1, **caractérisé en ce que** l'outil conjugué (6, 29) est réalisé sous forme de lame et effectue un mouvement de translation qui se compose d'une composante de mouvement (17) s'étendant le long du bord de séparation (9) et d'une composante de mouvement (18) s'étendant transversalement à celle-ci, de sorte qu'il en résulte un mouvement (19) de l'outil conjugué (6, 29) s'étendant de manière oblique par rapport au bord de séparation (9).

7. Procédé selon l'une des revendications précédentes, **caractérisé en ce que** le bord profilé (21), limitant vers l'extérieur la surface d'assemblage (10), de la pièce profilée respective est, dans la région traitée par l'outil conjugué (6, 29), déformé au moins dans certaines régions vers l'intérieur en direction de la surface d'assemblage (10) par l'outil conjugué (6, 29) lui-même ou un outil de traitement ultérieur (22, 22') mobile séparément.

8. Procédé selon la revendication 6, **caractérisé en ce que** la séparation de l'excès de masse fondue (7) est suivie par une étape de traitement ultérieur à l'aide d'un outil de traitement ultérieur (22, 22'), lors de laquelle la déformation du bord profilé (21) est effectuée.

9. Procédé selon l'une des revendications 7 ou 8, **caractérisé en ce que** l'outil de traitement ultérieur (22') traite simultanément les deux pièces profilées (1, 34).

10. Procédé selon l'une des revendications 7 à 9, **caractérisé en ce que** le traitement par le biais de l'outil de traitement ultérieur (22') est effectué de telle sorte qu'à la fois le bord profilé (21) respectif des pièces profilées (1, 34) est déformé au moyen de l'outil de traitement ultérieur (22') avant l'étape d'assemblage et, pendant l'étape d'assemblage ou une fois celle-ci terminée, une forme est donnée à la ligne d'assemblage résultant du joint de soudure.

11. Procédé selon la revendication 10, **caractérisé en ce que** le traitement par le biais de l'outil de traitement ultérieur (22') est effectué en deux étapes, de telle sorte que, dans la première étape de traitement, le bord profilé (21) respectif des pièces profilées (1, 34) est déformé au moyen de l'outil de traitement ultérieur (22') avant l'étape d'assemblage et, dans la deuxième étape de traitement, pendant l'étape d'assemblage ou une fois celle-ci terminée, une forme est donnée à la ligne d'assemblage résultant du joint de soudure au moyen de l'outil de traitement ultérieur (22').

12. Procédé selon l'une des revendications 7 à 11, **caractérisé en ce que** l'outil de traitement ultérieur (22') limite un écoulement de masse fondue en direction de la surface visible (11) pendant l'étape d'assemblage.

13. Procédé selon la revendication 7, **caractérisé en ce que** le bord profilé (21) est déformé conjointement avec le mouvement de l'outil conjugué le long du bord de séparation (9).

14. Dispositif pour relier au moins deux pièces profilées (1, 34), en particulier pour la fabrication de pièces profilées (1, 34) constituées d'une matière synthétique thermoplastique, pour former des cadres ou des battants de portes ou de fenêtres, comportant au moins deux supports de profilés (2) déplaçables les uns par rapport aux autres pour la fixation d'au moins deux pièces profilées (1, 34) et un élément chauffant (5) pouvant être inséré entre les supports de profilés (2) pour faire fondre respectivement à leurs extrémités les au moins deux pièces profilées (1) fixées au niveau de leurs surfaces d'assemblage (10), au moins un élément de limitation (3) destiné à reposer sur ou à s'appuyer contre au moins une surface extérieure d'au moins une pièce profilée (1, 34), de préférence pour la mise en contact d'au moins une surface visible (11) et/ou d'au moins une surface fonctionnelle (12) des pièces profilées (1), étant prévu, lequel élément de limitation est doté d'un bord de séparation (9) servant à contrôler et/ou limiter la sortie d'un excès de masse fondue (7) vers la surface extérieure de la pièce profilée (1) à la transition par rapport à la surface d'assemblage (10) respective, le dispositif présentant un outil conjugué (6, 29) servant à la séparation de l'excès de masse fondue (7) sortant sur le bord de séparation (9), lequel outil conjugué est déplaçable le long du bord de séparation (9) et à travers la masse fondue, **caractérisé en ce que** l'outil conjugué (6, 29) est guidé de manière mobile en rotation ou en pivotement par rapport au bord de séparation (9).

15. Dispositif selon la revendication 14, **caractérisé en ce que** l'outil conjugué (6, 29) est réalisé sous forme de rouleau.

16. Dispositif selon la revendication 15, **caractérisé en ce que** la surface de traitement, en particulier la surface d'enveloppe (16) de l'outil conjugué (6, 29) est profilée.

17. Dispositif selon l'une des revendications 14 à 16, **caractérisé en ce qu'**un outil de traitement ultérieur (22, 22') est prévu pour le traitement du bord profilé (21) de l'au moins une pièce profilée (1), l'outil de traitement ultérieur (22, 22') étant réalisé de préférence sous forme de rouleau, ou sous forme de baguette ou de bascule, de préférence présentant respectivement un contour d'estampage en forme de V.

18. Dispositif selon l'une des revendications 14 à 17, **caractérisé en ce que** l'élément chauffant (5) et/ou l'outil conjugué (6, 29) et/ou un outil de traitement ultérieur (22, 22') servant à la déformation du bord profilé (21) sont couplés en mouvement au moins partiellement et/ou sont dotés d'un entraînement propre ou reliés à celui-ci.

19. Dispositif selon l'une des revendications 14 à 18, **caractérisé en ce que** l'outil de traitement ultérieur (22') est réalisé pour traiter simultanément les deux pièces profilées (1, 34) à assembler l'une à l'autre.

20. Dispositif selon l'une des revendications 14 à 19, **caractérisé en ce que** l'outil de traitement ultérieur (22') présente une surface de traitement (46) pouvant être amenée en contact avec la pièce profilée (1, 34), laquelle surface de traitement s'étend au moins dans certaines parties suivant un angle supérieur à 0° par rapport à la surface d'assemblage (10).

21. Dispositif selon la revendication 20, **caractérisé en ce que** l'outil de traitement ultérieur (22') présente au moins une deuxième surface de traitement (47) qui se raccorde à la première surface de traitement (46) et s'étend suivant un angle différent par rapport à la surface d'assemblage (10).

22. Dispositif selon l'une des revendications 14 à 21, **caractérisé en ce que** l'élément de limitation (3) et/ou le bord de séparation (9) et/ou l'outil conjugué (6, 29) peu(ven)t être chauffé(s) ou refroidi(s) à des températures différentes.

23. Dispositif selon l'une des revendications 14 à 22, **caractérisé en ce que** l'outil conjugué (6, 29) est réalisé de manière plus résistante ou moins résistante vis-à-vis de l'usure mécanique que le bord de séparation (9).

24. Dispositif selon l'une des revendications 14 à 23, **caractérisé en ce qu'**un réglage en hauteur (41) d'au moins un outil conjugué (6, 29) est prévu pour le réglage de différentes épaisseurs de pièce profilée et/ou d'un recouvrement d'outil (35) entre l'outil conjugué (6, 29) et la surface d'assemblage (10) de la pièce profilée (1).

25. Dispositif selon la revendication 24, **caractérisé en ce que** le réglage en hauteur (41) est conçu pour un ajustement grossier et/ou fin de l'épaisseur de profilé, l'ajustement grossier s'effectuant de préférence en incréments millimétriques et l'ajustement fin s'effectuant de préférence en incréments de dixièmes de millimètres.

26. Dispositif selon l'une des revendications 14 à 25, **caractérisé en ce que** l'outil conjugué (6, 29) s'étend suivant un angle d'inclinaison (α) par rapport au plan de la surface d'assemblage (10).
